(19) 

Europäisches
Patentamt
European
Patent Office
Office européen
des brevets

(11) **EP 4 582 484 A1**

(12) **EUROPEAN PATENT APPLICATION**
published in accordance with Art. 153(4) EPC

(43) Date of publication:
09.07.2025 Bulletin 2025/28

(21) Application number: 23860270.0

(22) Date of filing: 28.08.2023

(51) International Patent Classification (IPC):
*C08L 77/00* (2006.01)          *C08K 3/01* (2018.01)
*C08L 23/26* (2025.01)

(52) Cooperative Patent Classification (CPC):
**C08K 3/01; C08L 23/26; C08L 77/00**

(86) International application number:
**PCT/JP2023/030938**

(87) International publication number:
**WO 2024/048508 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 02.09.2022 JP 2022140105

(71) Applicant: Mitsui Chemicals, Inc.
Tokyo 104-0028 (JP)

(72) Inventors:
• DOI, Haruka
Chiba 299-0265 (JP)
• AMANO, Akinori
Chiba 299-0265 (JP)
• WASHIO, Isao
Chiba 299-0265 (JP)
• SHIMAZAKI, Junya
Chiba 299-0265 (JP)

(74) Representative: Hoffmann Eitle
Patent- und Rechtsanwälte PartmbB
Arabellastraße 30
81925 München (DE)

(54) **POLYAMIDE RESIN COMPOSITION, METAL/RESIN JOINED BODY AND METHOD FOR
PRODUCING SAME, BUS BAR UNIT, DRIVE UNIT, AND MOBILE OBJECT**

(57)    The present invention provides a polyamide resin composition that enables the fabrication of a metal/resin joined body that exhibits a high airtightness during the initial phase of joining and satisfactorily maintains airtightness when repeatedly subjected to thermal shock. This polyamide resin composition is intended for joining with a metal member and comprises a polyamide resin (A1) having a melting point (Tm) measured by differential scanning calorimetry (DSC) of at least 280°C, a polyamide resin (A2) having a heat of fusion ($\Delta H$) measured by differential scanning calorimetry (DSC) of not more than 5 J/g, a modified polyolefin resin (B), and a nucleating agent (C). The content of the modified polyolefin resin (B) is 4.70 mass% to 20.00 mass% with reference to the total mass of the polyamide resin (A) and the modified polyolefin resin (B).

FIG. 1

EP 4 582 484 A1

**Description**

Technical Field

The present invention relates to a polyamide resin composition, a metal/resin joined body (joined body of metal and resin) and a method for producing the same, a bus bar unit, a drive unit, and a moving object.

Background Art

Polyamide resin compositions have excellent moldability, mechanical properties, and chemical resistance and therefore have been widely used as materials for various applications such as industrial materials, automobiles, electrical/electronic parts, and industrial parts.

When a polyamide resin composition is used for these applications, it is required to firmly join a resin member formed by molding the polyamide resin composition and a metal member. For this reason, a polyamide resin composition with excellent metal adhesion has been studied. For example, PTL 1 describes that a polyamide resin composition containing polyamide resin having properties of $Tm \leq 290°C$, $Tm - Tcc \geq 28°C$, and $0 \ J/g < \Delta Hm \leq 55 \ J/g$, and 0.1 to 10% by mass of talc is satisfactorily joined to aluminum.

Citation List

Patent Literature

PTL 1
Japanese Patent Application Laid-Open No. 2017-132243

Summary of Invention

Technical Problem

In some applications of the joined body of the polyamide resin composition and the metal member, airtightness between the polyamide resin composition and the metal member is required. For example, when the above-described joined body is used as an in-vehicle accessory such as a bus bar connected to a drive unit, a high degree of airtightness is required to prevent oil leakage. Furthermore, when such a joined body is used for applications such as in-vehicle accessories, it is also required to maintain sufficient airtightness even when temperature changes (cold-heat shocks) to low and high temperatures are repeatedly applied. However, a conventional joined body as described in PTL 1, in which a polyamide resin composition is joined to a metal member, has a problem such that the airtightness at the initial stage of joining is not sufficiently high or the airtightness decreases when the joined body is repeatedly subjected to cold-heat shocks.

In view of these circumstances, an object of the present invention is to provide a polyamide resin composition from which a metal/resin joined body having high airtightness in the initial stage of joining and capable of maintaining sufficient airtightness even when the metal/resin joined body is repeatedly subjected to cold-heat shocks can be produced, a metal/resin joined body using the polyamide resin composition and a method for producing the same. Another object of the present invention is to provide a bus bar unit, a drive unit, and a moving object each including the polyamide resin composition.

Solution to Problem

An aspect of the present invention relates to a polyamide resin composition described in the following [1] to [8].

[1] A polyamide resin composition to be joined with a metal member, the polyamide resin composition including:

a polyamide resin (A);
a modified polyolefin resin (B); and
a nucleating agent (C),
in which
the polyamide resin (A) includes

a polyamide resin (A1) having a melting point (Tm) of 280°C or more as measured by differential scanning calorimetry (DSC), and
a polyamide resin (A2) having a heat of fusion (ΔH) of 5 J/g or less as measured by the differential scanning calorimetry (DSC), and

a content of the modified polyolefin resin (B) is 4.70% by mass or more and 20.00% by mass or less based on a sum of a mass of the polyamide resin (A) and a mass of the modified polyolefin resin (B).

[2] The polyamide resin composition according to [1], in which the content of the modified polyolefin resin (B) is 4.70% by mass or more and 12.50% by mass or less based on the sum of the mass of the polyamide resin (A) and the mass of the modified polyolefin resin (B).

[3] The polyamide resin composition according to [1] or [2], in which a content of a copper-based heat-resistant stabilizer is 0.30% by mass or less based on a total mass of the polyamide resin composition.

[4] The polyamide resin composition according to any one of [1] to [3], in which

the polyamide resin (A1) includes a dicarboxylic acid-derived component unit (A1a) and a diamine-derived component unit (A1b), and
the dicarboxylic acid-derived component unit (A1a) includes a component unit derived from terephthalic acid and a component unit derived from isophthalic acid.

[5] The polyamide resin composition according to any one of [1] to [4], in which
the polyamide resin (A) includes a polyamide resin (A3) having a glass transition temperature (Tg) of 70°C or less as measured by the differential scanning calorimetry (DSC).

[6] The polyamide resin composition according to [5], in which
the polyamide resin (A3) has a melting point (Tm) of 200°C or less as measured by the differential scanning calorimetry (DSC).

[7] The polyamide resin composition according to any one of [1] to [6], in which:

the polyamide resin (A1) has a glass transition temperature (Tg) of 75°C or more and 160°C or less as measured by the differential scanning calorimetry (DSC); and
the polyamide resin (A2) has a glass transition temperature (Tg) of 75°C or more and 160°C or less as measured by the differential scanning calorimetry (DSC).

[8] The polyamide resin composition according to any one of [1] to [7], in which

the nucleating agent (C) is talc; and
a content of the nucleating agent (C) is 0.10 to 5.00% by mass based on a total mass of the polyamide resin composition.

Another aspect of the present invention relates to a metal/resin joined body described in the following [9].

[9] A metal/resin joined body including:

a metal member; and
a resin member that includes a polyamide resin composition and is joined to a surface of the metal member, in which
the polyamide resin composition includes

a polyamide resin (A),
a modified polyolefin resin (B), and
a nucleating agent (C),

the polyamide resin (A) includes

a polyamide resin (A1) having a melting point (Tm) of 280°C or more as measured by differential scanning calorimetry (DSC), and
a polyamide resin (A2) having a heat of fusion (ΔH) of 5 J/g or less as measured by the differential scanning calorimetry (DSC), and

a content of the modified polyolefin resin (B) is 4.70% by mass or more and 20.00% by mass or less based on a sum of a mass of the polyamide resin (A) and a mass of the modified polyolefin resin (B).

Another aspect of the present invention relates to a method for producing a metal/resin joined body described in the following [10] or [11].

[10] A method for producing a metal/resin joined body, including:

preparing a metal member;

bringing a polyamide resin composition into contact with a surface of the metal member, the polyamide resin composition being softened or molten; and

cooling the polyamide resin composition having been brought into contact with the surface of the metal member, in which

the polyamide resin composition includes

a polyamide resin (A),

a modified polyolefin resin (B), and

a nucleating agent (C),

the polyamide resin (A) includes

a polyamide resin (A1) having a melting point (Tm) of 280°C or more as measured by differential scanning calorimetry (DSC), and

a polyamide resin (A2) having a heat of fusion ($\Delta$H) of 5 J/g or less as measured by the differential scanning calorimetry (DSC), and

a content of the modified polyolefin resin (B) is 4.70% by mass or more and 20.00% by mass or less based on a sum of a mass of the polyamide resin (A) and a mass of the modified polyolefin resin (B).

[11] The method according to [10], in which

in the preparing the metal member, a surface of the metal member is subjected to a roughening treatment, the surface being to be joined to the polyamide resin composition.

Another aspect of the present invention relates to a bus bar unit described in the following [12].

[12] A bus bar unit including:

a bus bar made of a metal; and

a holding member that is disposed in contact with the bus bar and holds the bus bar,

in which

the holding member includes a molded article of a polyamide resin composition, the polyamide resin composition including a polyamide resin (A), a modified polyolefin resin (B), and a nucleating agent (C), the polyamide resin (A) including a polyamide resin (A1) having a melting point (Tm) of 280°C or more as measured by differential scanning calorimetry (DSC) and a polyamide resin (A2) having a heat of fusion ($\Delta$H) of 5 J/g or less as measured by the differential scanning calorimetry (DSC), and

a content of the modified polyolefin resin (B) is 4.70% by mass or more and 20.00% by mass or less based on a sum of a mass of the polyamide resin (A) and a mass of the modified polyolefin resin (B).

Another aspect of the present invention relates to a drive unit described in the following [13].

[13] A drive unit including:

a motor;

an inverter that supplies power to the motor; and

a bus bar unit that electrically connects the motor with the inverter,

in which the bus bar unit is the bus bar unit according to [12].

Another aspect of the present invention relates to a moving object described in the following [14].

[14] A moving object including:

a machine body; and

a drive unit,

in which the drive unit is the drive unit according to [13].

Advantageous Effects of Invention

The present invention can provide the following: a polyamide resin composition from which a metal/resin joined body having high airtightness in the initial stage of joining and capable of maintaining sufficient airtightness even when the metal/resin joined body is repeatedly subjected to cold-heat shocks can be produced; and a metal/resin joined body using the polyamide resin composition and a method for producing the same. The present invention can also provide a bus bar unit, a drive unit, and a moving object each including the polyamide resin composition.

Brief Description of Drawings

FIG. 1 is a schematic view illustrating an exemplary form of a metal/resin joined body as a bus bar unit; and
FIG. 2 is a configuration diagram illustrating an exemplary configuration of a moving object (vehicle) including the bus bar unit.

Description of Embodiments

1. Embodiment 1

Embodiment 1 of the present invention relates to a polyamide resin composition to be joined with a metal member. The polyamide resin composition includes a polyamide resin (A), a modified polyolefin resin (B), and a nucleating agent (C). The polyamide resin composition is suitable as a polyamide resin composition to be directly joined with a metal member having a surface with irregularities.

The polyamide resin composition is a resin composition whose resin component contains the polyamide resin (A) as its main component. The term "main component" means that the proportion of the polyamide resin (A) in the resin component is 50.00% by mass or more. The proportion of the polyamide resin (A) in the resin component is preferably 60.00% by mass or more, and more preferably 70.00% by mass or more. The upper limit of the proportion of the polyamide resin (A) in the resin component is not particularly limited, but may be 100.00% by mass or less, may be 90.00% by mass or less, or may be 80.00% by mass or less.

1-1. Polyamide resin (A)

The polyamide resin (A) includes a polyamide resin (A1) having a melting point (Tm) of 280°C or more as measured by differential scanning calorimetry (DSC), and a polyamide resin (A2) having a heat of fusion (ΔH) of 5 J/g or less as measured by differential scanning calorimetry (DSC). The polyamide resin (A) may further include a polyamide resin (A3) having a glass transition temperature (Tg) of 70°C or less as measured by differential scanning calorimetry (DSC).

1-1-1. Polyamide resin (A1)

The polyamide resin (A1) is a polyamide resin having a melting point (Tm) of 280°C or more as measured by differential scanning calorimetry (DSC). The polyamide resin (A1) may be a polyamide resin including a component unit (A1a) derived from a dicarboxylic acid (herein, a component unit derived from a dicarboxylic acid is also simply referred to as "dicarboxylic acid-derived component unit") and a component unit (A1b) derived from a diamine (herein, a component unit derived from a diamine is also simply referred to as "diamine-derived component unit"). To increase the melting point (Tm) and the glass transition temperature (Tg) of the polyamide resin (A1), the dicarboxylic acid-derived component unit (A1a) preferably includes a component unit derived from an aromatic dicarboxylic acid or an alicyclic dicarboxylic acid. The polyamide resin (A1) increases the joining strength of a resin member that includes the polyamide resin composition to a metal member. From the viewpoint of further increasing the joining strength and the airtightness, the polyamide resin (A1) is preferably a crystalline polyamide resin.

[Dicarboxylic acid-derived component unit (A1a)]

Examples of the aromatic dicarboxylic acid include terephthalic acid, naphthalenedicarboxylic acid and esters thereof. Examples of the alicyclic dicarboxylic acid include cyclohexanedicarboxylic acid and esters thereof. Among these, from the viewpoint of obtaining a polyamide resin with high crystallinity and high heat resistance, the dicarboxylic acid-derived component unit (A1a) preferably includes a component unit derived from an aromatic dicarboxylic acid, and more

5

preferably includes a component unit derived from terephthalic acid.

The content of the component unit derived from an aromatic dicarboxylic acid or an alicyclic dicarboxylic acid (preferably a component unit derived from an aromatic dicarboxylic acid, more preferably a component unit derived from terephthalic acid) is not particularly limited, but is preferably 50 mol% or more and 100 mol% or less based on the total number of moles of the dicarboxylic acid-derived component unit (A1a). When the content of the component unit is 50 mol% or more, the crystallinity of the polyamide resin is easily increased. From the same viewpoint, the content of the component unit is more preferably 70 mol% or more and 100 mol% or less.

In the present embodiment, the dicarboxylic acid-derived component unit (A1a) preferably includes a component unit (a1) derived from terephthalic acid, naphthalenedicarboxylic acid, or cyclohexanedicarboxylic acid. Such a component unit (a1) can enhance the crystallinity of the polyamide resin (A1) and increase the joining strength and airtightness of the resin member to the metal member. The content of the component unit (a1) is preferably more than 20 mol% and 100 mol% or less based on the total number of moles of the dicarboxylic acid-derived component unit (A1a), from the viewpoint of obtaining satisfactory crystallinity of the polyamide resin. From the viewpoint of further enhancing the crystallinity of the polyamide resin, the content of the component unit (a1) is preferably 45 mol% or more and 100 mol% or less, more preferably 50 mol% or more and 99 mol% or less, still more preferably 60 mol% or more and 90 mol% or less, even still more preferably 60 mol% or more and 85 mol% or less, and particularly preferably more than 60 mol% and 80 mol% or less, based on the total number of moles of the dicarboxylic acid-derived component unit (A1a).

The dicarboxylic acid-derived component unit (A1a) may include, within a range that does not impair the effects of the present invention, an aromatic carboxylic acid component unit (a2) or a component unit (a3) derived from an aliphatic dicarboxylic acid having 4 or more and 20 or less carbon atoms, other than the component unit (a1).

Examples of the component unit (a2) derived from an aromatic dicarboxylic acid other than terephthalic acid include component units derived from isophthalic acid and 2-methylterephthalic acid. Among these, the component unit derived from isophthalic acid is preferable. When the polyamide resin (A1) includes the component unit (a2), the content of the component unit (a2) is preferably 1 mol% or more and 50 mol% or less, more preferably 10 mol% or more and 40 mol% or less, still more preferably 15 mol% or more and 40 mol% or less, and particularly preferably 20 mol% or more and less than 40 mol% based on the total number of moles of the dicarboxylic acid-derived component unit (A1a), from the viewpoint of obtaining satisfactory crystallinity of the polyamide resin.

The component unit (a3) derived from an aliphatic dicarboxylic acid is a component unit derived from an aliphatic dicarboxylic acid having an alkylene group having 4 or more and 20 or less carbon atoms, and is preferably a component unit derived from an aliphatic dicarboxylic acid having an alkylene group having 6 or more and 12 or less carbon atoms. Examples of the aliphatic dicarboxylic acid include dimethylmalonic acid, succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid, and suberic acid component units. Among these, adipic acid and sebacic acid are preferable. When the polyamide resin (A1) includes the component unit (a3), the content of the component unit (a3) is preferably 0 mol% or more and 40 mol% or less, more preferably 0 mol% or more and 20 mol% or less, still more preferably 1 mol% or more and 10 mol% or less, and particularly preferably 1 mol% or more and 5 mol% or less, based on the total number of moles of the dicarboxylic acid-derived component unit (A1a) from the viewpoint of enhancing the crystallinity of the polyamide resin (A1).

The dicarboxylic acid-derived component unit (A1a) preferably includes a component unit (a1) derived from terephthalic acid and a component unit (a2) derived from isophthalic acid. When the dicarboxylic acid-derived component unit (A1a) includes the component unit (a2) derived from isophthalic acid in addition to the component unit (a1) derived from terephthalic acid, the melting point (Tm) of the polyamide resin (A1) can be decreased and the moldability can be improved, as compared with the case where the dicarboxylic acid-derived component unit (A1a) includes only the component unit (a1) derived from terephthalic acid.

The dicarboxylic acid-derived component unit (A1a) may further contain a small amount of a tribasic or higher polybasic carboxylic acid component unit such as trimellitic acid or pyromellitic acid in addition to the above-described component unit (a1), component unit (a2), and component unit (a3). The content of such a polybasic carboxylic acid component unit may be 0 mol% or more and 5 mol% or less based on the total number of moles of the dicarboxylic acid-derived component unit (A1a).

[Diamine-derived component unit (A1b)]

The diamine-derived component unit (A1b) preferably includes a component unit (b1) derived from a linear alkylenediamine having 4 to 18 carbon atoms, and may further include a component unit (b2) derived from an alkylenediamine having a side chain alkyl group and having 4 to 18 carbon atoms, or a component unit (b3) derived from a alicyclic diamine having 4 to 20 carbon atoms.

In the diamine-derived component unit (A1b), the amount of the component unit (b1) derived from a linear alkylenediamine having 4 to 18 carbon atoms is preferably 20 mol% or more and 100 mol% or less and more preferably in an amount of 20 mol% or more and 80 mol% or less based on the total number of moles of the diamine-derived component unit included in the polyamide resin (A1). When the content of the component unit is 20 mol% or more, the crystallization rate is appropriately increased, and the crystallinity and mechanical strength of the polyamide resin (A1) is more likely to be appropriately enhanced. When the content of the above component unit is 100 mol% or less, preferably 80 mol% or less, the crystallization rate of the polyamide resin (A1) does not become too high, and thus, the fluidity during molding is not easily impaired. From the same viewpoint, the content of the component unit derived from a linear aliphatic diamine is still more preferably 30 mol% or more and 60 mol% or less based on the above total.

Examples of the component unit (b1) derived from a linear alkylenediamine having 4 to 18 carbon atoms include a component unit derived from, for example, 1,4-diaminobutane, 1,6-diaminohexane, 1,7-diaminoheptane, 1,8-diaminooctane, 1,9-diaminononane, 1,10-diaminodecane, 1,11-diaminoundecane, or 1,12-diaminododecane.

Among these, a component unit derived from 1,6-diaminohexane, 1,8-diaminooctane, 1,10-diaminodecane, or 1,12-diaminododecane are preferable, and a component unit derived from 1,6-diaminohexane is more preferable. The polyamide resin (A1) may contain a plurality of types of these component units.

In addition, the diamine-derived component unit (A1b) may include a component unit (b2) derived from an alkylene diamine having a side chain alkyl group and having 4 to 18 carbon atoms or a component unit (b3) derived from an alicyclic diamine having 4 to 20 carbon atoms. At this time, when the total number of moles of diamine-derived component units included in the polyamide resin (A1) is 100 mol%, the amount of the component unit (b2) derived from an alkylene diamine having a side chain alkyl group and having 4 to 18 carbon atoms or the component unit (b3) derived from an alicyclic diamine having 4 to 20 carbon atoms is preferably 20 mol% or more and 80 mol% or less. When the content of the component unit is 20 mol% or more, the crystallization rate of the polyamide resin (A1) tends to become appropriately slow, thereby enhancing the fluidity during molding. When the content of the component unit is 80 mol% or less, the crystallinity and mechanical strength of the polyamide resin (A1) are less likely to be impaired. From the same viewpoint, the content of the component unit derived from a branched aliphatic diamine is more preferably 40 mol% or more and 70 mol% or less based on the above total.

Examples of the component unit (b2) derived from alkylene diamines having a side chain alkyl group and 4 to 18 carbon atoms include component units derived from 1-butyl-1,2-diaminoethane, 1,1-dimethyl-1,4-diaminobutane, 1-ethyl-1,4-diaminobutane, 1,2-dimethyl-1,4-diaminobutane, 1,3-dimethyl-1,4-diaminobutane, 1,4-dimethyl-1,4-diaminobutane, 2,3-dimethyl-1,4-diaminobutane, 2-methyl-1,5-diaminopentane, 2,5-dimethyl-1,6-diaminohexane, 2,4-dimethyl-1,6-diaminohexane, 3,3-dimethyl-1,6-diaminohexane, 2,2-dimethyl-1,6-diaminohexane, 2,2,4-trimethyl-1,6-diaminohexane, 2,4,4-trimethyl-1,6-diaminohexane, 2,4-diethyl-1,6-diaminohexane, 2,3-dimethyl-1,7-diaminoheptane, 2,4-dimethyl-1,7-diaminoheptane, 2,5-dimethyl-1,7-diaminoheptane, 2,2-dimethyl-1,7-diaminoheptane, 2-methyl-4-ethyl-1,7-diaminoheptane, 2-ethyl-4-methyl-1,7-diaminoheptane, 2,2,5,5-tetramethyl-1,7-diaminoheptane, 3-isopropyl-1,7-diaminoheptane, 3-isooctyl-1,7-diaminoheptane, 1,3-dimethyl-1,8-diaminooctane, 1,4-dimethyl-1,8-diaminooctane, 2,4-dimethyl-1,8-diaminooctane, 3,4-dimethyl-1,8-diaminooctane, 4,5-dimethyl-1,8-diaminooctane, 2,2-dimethyl-1,8-diaminooctane, 3,3-dimethyl-1,8-diaminooctane, 4,4-dimethyl-1,8-diaminooctane, 3,3,5-trimethyl-1,8-diaminooctane, 2,4-diethyl-1,8-diaminooctane, 5-methyl-1,9-diaminononane, and 2,2-dimethylpropanediamine. Among these, a component unit derived from the following side chain alkyl diamine is preferable: a side chain alkyl diamine having one or two side chain alkyl groups each having one or two carbon atoms and a main chain having 4 to 10 carbon atoms. In addition, a component unit derived from 2-methyl-1,5-diaminopentane is more preferable. The polyamide resin (A1) may contain a plurality of types of these component units.

Examples of the component unit (b3) derived from an alicyclic diamine having 4 to 20 carbon atoms include component units derived from 1,3-diaminocyclohexane, 1,4-diaminocyclohexane, 1,3-bis(aminomethyl)cyclohexane, 1,4-bis(aminomethyl)cyclohexane, isophorone diamine, piperazine, 2,5-dimethylpiperazine, bis(4-aminocyclohexyl)methane, bis(4-aminocyclohexyl)propane, 4,4'-diamino-3,3'-dimethyldicyclohexylpropane, 4,4'-diamino-3,3'-dimethyldicyclohexylmethane, 4,4'-diamino-3,3'-dimethyl-5,5'-dimethyldicyclohexylmethane, 4,4'-diamino-3,3'-dimethyl-5,5'-dimethyldicyclohexylpropane, $\alpha,\alpha'$-bis(4-aminocyclohexyl)-p-diisopropylbenzene, $\alpha,\alpha'$-bis(4-aminocyclohexyl)-m-diisopropylbenzene, $\alpha,\alpha'$-bis(4-aminocyclohexyl)-1,4-cyclohexane, $\alpha,\alpha'$-bis(4-aminocyclohexyl)-1,3-cyclohexane, and bis(aminomethyl)norbornane. Among these, the component units derived from 1,3-diaminocyclohexane, 1,4-diaminocyclohexane, 1,3-bis(aminomethyl)cyclohexane, 1,4-bis(aminomethyl)cyclohexane, bis(4-aminocyclohexyl)methane, 4,4'-diamino-3,3'-dimethyldicyclohexylmethane, and bis(aminomethyl)norbornane are preferable, component units derived from 1,3-diaminocyclohexane, 1,4-diaminocyclohexane, bis(4-aminocyclohexyl)methane, 1,3-bis(aminocyclohexyl)methane, 1,3-bis(aminomethyl)cyclohexane, and bis(aminomethyl)norbornane are more preferable, and component units derived from 1,3-bis(aminomethyl)cyclohexane and bis(aminomethyl)norbornane are particularly preferable.

In the present specification, the number of carbon atoms in the component unit derived from an alkylene diamine having a side chain alkyl group is the sum of the number of carbon atoms in the main chain alkylene group and the number of carbon atoms in the side chain alkyl group, unless otherwise specified.

The polyamide resin (A1) may further include, in addition to the component unit (b1) derived from a linear alkylenediamine having 4 to 18 carbon atoms, the component unit (b2) derived from an alkylenediamine having a side chain alkyl group and having 4 to 18 carbon atoms, and the component unit (b3) derived from an alicyclic diamine having 4 to 20 carbon atoms, a component unit derived from another diamine such as a small amount of component unit derived from m-xylylenediamine. The content of such a component unit derived from another diamine may be 50 mol% or less, preferably 40 mol% or less, based on the total amount of the diamine-derived component unit (A1b).

In the polyamide resin (A1), at least some of the terminal groups of the molecules thereof may be blocked with a terminal blocking agent from the viewpoint of increasing thermal stability during compounding and molding, and further increasing mechanical strength. For example, when the terminals of the molecules are a carboxy group, the terminal blocking agent is preferably a monoamine, and when the terminals of the molecules are an amino group, the terminal blocking agent is preferably a monocarboxylic acid.

Examples of the monoamine include aliphatic monoamines such as methylamine, ethylamine, propylamine, and butylamine, alicyclic monoamines such as cyclohexylamine and dicyclohexylamine, and aromatic monoamines such as aniline and toluidine. Examples of the monocarboxylic acid include aliphatic monocarboxylic acids having 2 or more and 30 or less carbon atoms such as acetic acid, propionic acid, butyric acid, valeric acid, caproic acid, caprylic acid, lauric acid, tridecylic acid, myristic acid, palmitic acid, stearic acid, oleic acid, and linoleic acid, aromatic monocarboxylic acids such as benzoic acid, toluic acid, naphthalenecarboxylic acid, methylnaphthalenecarboxylic acid, and phenylacetic acid, and alicyclic monocarboxylic acids such as cyclohexanecarboxylic acid. The aromatic monocarboxylic acid and the alicyclic monocarboxylic acid may have a substituent in the cyclic structure thereof.

[Physical properties]

The polyamide resin (A1) may have a melting point (Tm) of 280°C or more and 340°C or less. When the melting point (Tm) of the polyamide resin (A1) is 280°C or more, the mechanical strength and heat resistance of the resin composition and a molded article thereof in a high temperature range are less likely to be impaired. When the melting point (Tm) is 340°C or less, it is not necessary to excessively increase the molding temperature, and therefore, the moldability of the resin composition tends to becomes satisfactory. From the above viewpoint, the melting point (Tm) of the polyamide resin is more preferably 290°C or more and 340°C or less.

The polyamide resin (A1) may have a glass transition temperature (Tg) of more than 70°C and 160°C or less, which is preferably 75°C or more and 160°C or less. Thus, it is possible to easily maintain the fluidity of the resin composition without excessively increasing the mold temperature during the molding process, thereby improving the moldability. By maintaining the fluidity of the resin composition during the molding process, the resin composition can enter into the unevenness on the surface of the metal member and to sufficiently adhere the resin composition to the unevenness. As a result, it is possible to further increase the joining strength between the metal member and the resin member and to further increase the airtightness.

The polyamide resin (A1) preferably has a heat of fusion ($\Delta H$) of 20 J/g or more. When the heat of fusion ($\Delta H$) of the polyamide resin (A1) is 20 J/g or more, the crystallinity increases, which tends to enhance the heat resistance and the joining strength of the resin member. The upper limit value of the heat of fusion ($\Delta H$) of the polyamide resin (A1) is not particularly limited, but may be 130 J/g from the viewpoint of enhancing the moldability. The heat of fusion ($\Delta H$) of the polyamide resin (A1) is preferably 30 J/g or more and 130 J/g or less, and more preferably 30 J/g or more and 100 J/g or less.

The heat of fusion ($\Delta H$), melting point (Tm), and glass transition temperature (Tg) of a polyamide resin can be measured using a differential scanning calorimeter (DSC220C, manufactured by Seiko Instruments Inc.).

Specifically, approximately 5 mg of a crystalline polyamide resin is sealed in an aluminum pan for measurement and heated from room temperature to 350°C at a rate of 10°C/min. To completely melt the resin, the temperature is maintained at 350°C for 3 minutes, and then lowered to 30°C at a rate of 10°C/min. After the resin is allowed to stand at 30°C for 5 minutes, the second heating is performed at 10°C/min to 350°C. The temperature (°C) of the endothermic peak in this second heating is used as the melting point (Tm) of the crystalline polyamide resin, and the displacement point corresponding to the glass transition is used as the glass transition temperature (Tg). The heat of fusion ($\Delta H$) is determined from the area of the endothermic peak during melting in the first heating process in accordance with JIS K7122 (2012).

The melting point (Tm), glass transition temperature (Tg), and heat of fusion ($\Delta H$) of the polyamide resin (A1) can be adjusted, for example, by the composition of the above-described dicarboxylic acid-derived component unit (A1a) or the number of carbon atoms per diamine-derived component unit (A1b). To increase the melting point of the polyamide resin (A1), for example, the content ratio of the component unit derived from terephthalic acid may be increased.

The intrinsic viscosity [$\eta$] of the polyamide resin (A1) measured in 96.5% sulfuric acid at a temperature of 25°C is preferably 0.6 dl/g or more and 1.5 dl/g or less. When the intrinsic viscosity [$\eta$] of the polyamide resin (A1) is 0.6 dl/g or more, the mechanical strength (for example, toughness) of the molded article is more likely to be satisfactorily increased. When the intrinsic viscosity [$\eta$] of the polyamide resin (A1) is 1.5 dl/g or less, the fluidity of the polyamide resin composition during molding is less likely to be impaired. From the same viewpoint, the intrinsic viscosity [$\eta$] of the polyamide resin is more preferably 0.8 dl/g or more and 1.2 dl/g or less. The intrinsic viscosity [$\eta$] can be adjusted, for example, by the amount of terminal blocking of the polyamide resin (A1).

The intrinsic viscosity of the polyamide resin can be measured in accordance with JIS K6810 (1977). Specifically, 0.5 g of the polyamide resin (A1) is dissolved in 50 ml of 96.5% sulfuric acid solution to prepare a sample solution. The intrinsic viscosity can be obtained by measuring the falling time (seconds) of the sample solution with an Ubbelohde viscometer at $25 \pm 0.05°C$, and applying the obtained value to the following equation for calculation.

$$[\eta] = \eta SP / [C(1 + 0.205\eta SP)]$$

In the above equation, symbols and variables are defined as follows.

$[\eta]$: Intrinsic viscosity (dl/g)
$\eta SP$: Specific viscosity
C: Sample concentration (g/dl)

The $\eta SP$ is obtained by the following equation.

$$\eta SP = (t - t0) / t0$$

t: Falling time of sample solution (seconds)
t0: Falling time of blank sulfuric acid (seconds)

[Production method]

The polyamide resin (A1) can be produced, for example, by polycondensation of the above-described dicarboxylic acid and diamine in a uniformly dissolved solution. Specifically, as described in WO03/085029, a low-order condensate is obtained by heating a dicarboxylic acid and a diamine in the presence of a catalyst, and then a shear stress is applied to the melt of this low-order condensate for subjecting the melt to polycondensation, thereby producing the polyamide resin. The dicarboxylic acid, a raw material for the polyamide resin (A1), may be at least partially a biomass-derived dicarboxylic acid, and the diamine, a raw material for the polyamide resin (A1), may be at least partially a biomass-derived diamine. That is, the polyamide resin (A1) may be a biomass-derived polyamide resin obtained by polymerizing a raw material group including a biomass-derived raw material.

From the viewpoint of adjusting the intrinsic viscosity of the polyamide resin (A1), the terminal blocking agent may be added to the reaction system. The intrinsic viscosity $[\eta]$ (or molecular weight) of the polyamide resin (A1) can be adjusted by adjusting the amount of the terminal blocking agent to be added.

The terminal blocking agent is added to the reaction system of the dicarboxylic acid and the diamine. The amount of the terminal blocking agent to be added is preferably 0.07 mol or less, more preferably 0.05 mol or less, based on 1 mol of the total dicarboxylic acid.

The content of the polyamide resin (A1) is preferably 25.00% by mass or more and 80.00% by mass or less, more preferably 30.00% by mass or more and 80.00% by mass or less, still more preferably 35.00% by mass or more and 80.00% by mass or less, and even still more preferably 40.00% by mass or more and 80.00% by mass or less, based on the total mass of the polyamide resin composition. As the content of the polyamide resin (A1) is increased, the joining strength of the resin member to the metal member can be enhanced. On the other hand, the upper limit of the polyamide resin (A1) may be set to the above range to leave room for obtaining a further effects of improving the joining strength and the airtightness by adding another component to delay the crystallization rate.

1-1-2. Polyamide resin (A2)

The polyamide resin (A2) is a polyamide resin having a heat of fusion ($\Delta H$) of 5 J/g or less as measured by differential scanning calorimetry (DSC). Since the polyamide resin (A2) has a lower crystallinity than the polyamide resin (A1), it is possible to delay the crystallization rate of the resin composition during the molding of the resin member. This allows the resin composition in the resin member to sufficiently flow along the unevenness on the surface of the metal member, and to bring the resin composition into close contact with the unevenness. For this reason, it is considered that the polyamide resin (A2) can further enhance the joining strength between the metal member and the resin member and can further enhance the airtightness.

It is preferable that the polyamide resin (A2) has a melting point (Tm) that is substantially not measurable in differential scanning calorimetry (DSC). The term "melting point (Tm) is substantially not measurable" refers to a case where, in the measurement method described above, a displacement point corresponding to the melting point is substantially not observed.

The polyamide resin (A2) may have a glass transition temperature (Tg) of more than 70°C and 160°C or less, and preferably 75°C or more and 160°C or less. Thus, it is possible to easily maintain the fluidity of the resin composition without excessively increasing the mold temperature during the molding process, thereby improving the moldability. By maintaining the fluidity of the resin composition during the molding process, the resin composition can sufficiently enter into the unevenness on the surface of the metal member and to sufficiently adhere the resin composition to the unevenness. As a result, it is possible to further increase the joining strength between the metal member and the resin member and to further increase the airtightness.

The heat of fusion ($\Delta H$) of the polyamide resin (A2) is 5 J/g or less, and is more preferably 0 J/g. When the heat of fusion ($\Delta H$) of the polyamide resin (A2) is 5 J/g or less, the crystallinity is appropriately low, and thus, the crystallization rate of the resin composition during the molding of the resin member can be further sufficiently delayed. The polyamide resin (A2) preferably exhibits amorphous properties. The heat of fusion ($\Delta H$) can be measured in the same manner as described above.

The polyamide resin (A2) may be polyamide resin including a dicarboxylic acid-derived component unit (A2a) and a diamine-derived component unit (A2b).

[Dicarboxylic acid-derived component unit (A2a)]

The dicarboxylic acid-derived component unit (A2a) preferably includes at least a component unit derived from isophthalic acid. The component unit derived from isophthalic acid can lower the crystallinity of the polyamide resin (A2).

The content of the component unit derived from isophthalic acid is preferably 40 mol% or more, and more preferably 50 mol% or more, based on the total amount of the dicarboxylic acid-derived component unit (A2a). When the content of the component unit derived from isophthalic acid is 40 mol% or more, the polyamide resin (A2) is more likely to become amorphous. Although the upper limit of the content of the component unit derived from isophthalic acid is not particularly limited, it can be 100 mol% or less, and is preferably 90 mol% or less.

The dicarboxylic acid-derived component unit (A2a) may further include a component unit derived from another dicarboxylic acid other than the component unit derived from isophthalic acid, as long as the effect of the present invention is not impaired. Examples of other dicarboxylic acids include aromatic dicarboxylic acids other than isophthalic acid, such as terephthalic acid, 2-methylterephthalic acid, and naphthalenedicarboxylic acid, as well as aliphatic dicarboxylic acids and alicyclic dicarboxylic acids. The aliphatic dicarboxylic acid and the alicyclic dicarboxylic acid may be the same as the aliphatic dicarboxylic acid and the alicyclic dicarboxylic acid described above, respectively. Among these, an aromatic dicarboxylic acid other than isophthalic acid is preferred, and terephthalic acid is more preferred.

In the dicarboxylic acid-derived component unit (A2a), the molar ratio of the component unit derived from isophthalic acid to the component unit derived from an aromatic dicarboxylic acid other than isophthalic acid (preferably terephthalic acid) preferably satisfy the following: the component unit derived from isophthalic acid/the component unit derived from an aromatic dicarboxylic acid other than isophthalic acid = 55/45 to 100/0 (molar ratio), and more preferably 60/40 to 90/10 (molar ratio). When the amount of the component unit derived from isophthalic acid is equal to or more than a certain amount, the polyamide resin (A2) is more likely to become amorphous, and the crystallization rate of the resin composition during the molding of the resin member is delayed, thereby further enhancing the joining strength between the metal member and the resin member and further enhancing the airtightness.

[Diamine-derived component unit (A2b)]

The diamine-derived component unit (A2b) preferably includes a component unit derived from an aliphatic diamine having 4 to 15 carbon atoms.

The aliphatic diamine having 4 to 15 carbon atoms is the same as the aliphatic diamine having 4 to 15 carbon atoms in the above-described diamine-derived component units (A1b), and is preferably 1,6-hexanediamine.

The content of the component unit derived from an aliphatic diamine having 4 to 15 carbon atoms is preferably 50 mol% or more, and more preferably 60 mol% or more, based on the total amount of the diamine-derived component unit (A2b).

The diamine-derived component unit (A2b) may further include a component unit derived from another diamine other than the component unit derived from an aliphatic diamine having 4 to 15 carbon atoms, as long as the effect of the present invention is not impaired. Examples of the other diamines include alicyclic diamines and aromatic diamines. The alicyclic diamine and the aromatic diamine may be the same as the alicyclic diamine and the aromatic diamine described above, respectively. The content of another diamine component unit may be 50 mol% or less, and preferably 40 mol% or less.

Specific examples of the polyamide resin (A2) include polycondensation products of isophthalic acid/terephthalic acid/1,6-hexanediamine/bis(3-methyl-4-aminocyclohexyl)methane, isophthalic acid/bis(3-methyl-4-aminocyclohexyl)methane/ω-laurolactam, isophthalic acid/terephthalic acid/1,6-hexanediamine, isophthalic acid/2,2,4-trimethyl-1,6-hexanediamine/2,4,4-trimethyl-1,6-hexanediamine, isophthalic acid/terephthalic acid/2,2,4-trimethyl-1,6-hexanediamine/2,4,4-trimethyl-1,6-hexanediamine, isophthalic acid/bis(3-methyl-4-aminocyclohexyl)methane/ω-laurolactam, and isophthalic acid/terephthalic acid/other diamine components. Among these, the polycondensation product of isophthalic acid/terephthalic acid/1,6-hexanediamine is preferable. The polyamide resin (A2) may be contained alone or in combination of two or more.

The polyamide resin (A2) preferably has an intrinsic viscosity [η] of 0.4 dl/g or more and 1.6 dl/g or less and more preferably 0.5 dl/g or more and 1.2 dl/g or less, as measured in 96.5% sulfuric acid at a temperature of 25°C. The intrinsic viscosity [η] of the polyamide resin (A2) can be measured in the same manner as the intrinsic viscosity [η] of the polyamide resin (A1) described above.

The polyamide resin (A2) can be produced in the same manner as the above-described polyamide resin (A1).

The content of the polyamide resin (A2) is preferably 5.00% by mass or more, more preferably 10.00% by mass or more, and still more preferably 15.00% by mass or more, based on the total mass of the polyamide resin composition. By setting the content of the polyamide resin (A2) within the above-described range, it is possible to achieve the effect of improving the joining strength and the airtightness due to the delay in crystallization more sufficiently. The upper limit of the content of the polyamide resin (A2) is not particularly limited, but can be 30.00% by mass or less, or may be 25.00% by mass or less, from the viewpoint of blending a sufficient amount of the polyamide resin (A1) in the resin composition.

1-1-3. Polyamide resin (A3)

The polyamide resin (A3) is a polyamide resin having a glass transition temperature (Tg) of 70°C or less as measured by differential scanning calorimetry (DSC). The glass transition temperature (Tg) of the polyamide resin (A3) is less than that of the polyamide resin (A1). Therefore, the fluidity of the polyamide resin (A3) is less likely to decrease than that of the polyamide resin (A1) when the temperature of the resin composition decreases during the molding of the resin member, and thus decreasing of the fluidity of the entire resin composition can be prevented. This allows the resin composition in the resin member to sufficiently flow along the unevenness on the surface of the metal member, and to bring the resin composition into close contact with the unevenness. For this reason, it is considered that the polyamide resin (A3) can further enhance the joining strength between the metal member and the resin member and can further enhance the airtightness.

The polyamide resin (A3) may be an aliphatic polyamide that includes a component unit having an amide bond (-NH-C(=O)-) and not having an aromatic ring (amide bond-containing component unit not having an aromatic ring). The content of the component unit is preferably 80 mol% or more, and more preferably 90 to 100 mol%, based on the total number of moles of amide bond-containing component units constituting the polyamide resin (A3).

The polyamide resin (A3), which is an aliphatic polyamide, may be obtained by a polycondensation reaction of a dicarboxylic acid and a diamine, may be obtained by a polycondensation reaction of an aminocarboxylic acid, or may be obtained by a ring-opening polymerization reaction of a lactam. That is, the polyamide resin (A3), which is an aliphatic polyamide, is constituted by at least one of the following: an amide bond-containing component unit including a dicarboxylic acid-derived component unit (A3a) and a diamine-derived component unit (A3b); a component unit (A3c) derived from an aminocarboxylic acid; and a component unit (A3d) derived from a lactam.

[Dicarboxylic acid-derived component unit (A3a)]

The dicarboxylic acid-derived component unit (A3a) includes a component unit derived from an aliphatic dicarboxylic acid. The aliphatic dicarboxylic acid is preferably an aliphatic dicarboxylic acid having 2 to 14 carbon atoms and more preferably an aliphatic dicarboxylic acid having 4 to 14 carbon atoms. Examples of the aliphatic dicarboxylic acid include oxalic acid, adipic acid, pimelic acid, suberic acid, azelaic acid, sebacic acid, dodecanedioic acid, and tetradecanedioic acid. Among these, adipic acid, sebacic acid, and dodecanedioic acid are preferable.

The content of the component unit derived from the aliphatic dicarboxylic acid is preferably 80 mol% or more, and more preferably 90 to 100 mol%, based on the total number of moles of the dicarboxylic acid-derived component unit (e1).

[Diamine-derived component unit (A3b)]

The diamine-derived component unit (A3b) includes a component unit derived from an aliphatic diamine. The aliphatic diamine may be the same as the aliphatic diamine in the semi-aromatic polyamide (A1).

The content of the component unit derived from the aliphatic diamine is preferably 80 mol% or more and more preferably 90 to 100 mol%, based on the total number of moles of the diamine-derived component unit (A3b).

[Component unit (A3c) derived from aminocarboxylic acid]

The aminocarboxylic acid may be an aminocarboxylic acid having 6 to 12 carbon atoms, preferably 6 to 10 carbon atoms. Examples of such an aminocarboxylic acid include 6-aminocaproic acid, 7-aminoheptanoic acid, 11-aminoundecanoic acid, and 12-aminododecanoic acid.

[Component unit (A3d) derived from lactam]

The lactam may be a lactam having 6 to 12 carbon atoms, preferably 6 to 10 carbon atoms. Examples of such a lactam include α-pyrrolidone, ε-caprolactam, undecanolactam, and ω-laurolactam.

Examples of the polyamide resin (A3), which is an aliphatic polyamide, include polyamide 6, polyamide 66, polyamide 610, polyamide 12, and the like.

The melting point (Tm) of the polyamide resin (A3) measured by differential scanning calorimetry (DSC) is preferably 270°C or less, more preferably 100°C or more and 250°C or less, and still more preferably 120°C or more and 220°C or less. The melting point (Tm) of the polyamide resin (A1) can be measured in the same manner as the melting point (Tm) of the above-described polyamide resin (A1).

The polyamide resin (A3) can be produced by a known method.

The content of the polyamide resin (A3) is preferably 1.00% by mass or more and 10.00% by mass or less based on the total mass of the polyamide resin composition. When the amount of the polyamide resin (A3) is large, that is, equal to or more than a certain amount, the joining strength between the metal member and the resin member can be further increased, and the initial airtightness and the airtightness after cold-heat shocks are repeatedly applied can be further increased. When the amount of aliphatic polyamide (D) is equal to or less than a certain amount, it is easy to increase the resin strength, thereby enhancing the joining strength and/or the airtightness. From the above viewpoint, the content of the polyamide resin (A3) is more preferably 1.00% by mass or more and 8.00% by mass or less, and is still more preferably 3.00% by mass or more and 5.50% by mass or less.

1-2. Modified polyolefin resin (B)

The polyamide resin composition contains a modified polyolefin resin (B) in addition to the polyamide resin (A). The modified polyolefin resin (B) decreases the elastic modulus of the polyamide resin composition and imparts flexibility to the resin member. By making the resin member flexible with the modified polyolefin resin (B), cracking or peeling of the resin member due to stress caused by the expansion and contraction of the resin member when repeatedly subjected to cold-heat shocks or by the difference in the linear expansion coefficient between the resin member and the metal member is less likely to occur. Thus, it is considered that the modified polyolefin resin (B) can maintain the airtightness more favorably when cold-heat shocks are repeatedly applied.

In addition, the modified polyolefin resin (B) can decrease the crystallization rate of the resin composition during the molding of the resin member and can delay crystallization. This allows the resin composition in the resin member to sufficiently flow along the unevenness on the surface of the metal member, and to bring the resin composition into close contact with the unevenness. For this reason, it is considered that the modified polyolefin resin (B) can further enhance the joining strength between the metal member and the resin member and can further enhance the airtightness.

The modified polyolefin resin (B) is an olefin polymer having a polyolefin unit and a functional group constitutional unit. Examples of the functional group contained in the above-described functional group constitutional unit include functional groups with heteroatoms, aromatic hydrocarbon groups, and the like. Preferably, the modified polyolefin resin (B) is a modified olefin polymer having a polyolefin unit and a constitutional unit (functional group constitutional unit) having a functional group with a heteroatom.

The heteroatom is preferably oxygen. Examples of the functional group with a heteroatom include ester group, ether group, carboxylic acid group (including carboxylic anhydride group), aldehyde group, ketone group, and the like.

The modified polyolefin resin (B) preferably includes 0.1% to 5.0% by mass of the functional group constitutional unit based on 100% by mass of the modified polyolefin resin (B). The content ratio of the functional group constitutional unit included in the modified polyolefin resin (B) is preferably 0.2% to 3.0% by mass, more preferably 0.2% to 2.0% by mass. When the amount of the functional group constitutional unit is within the above range, the impact resistance and the elongation rate of the resin composition are more likely to increase.

The content ratio of the functional group constitutional unit included in the modified polyolefin resin (B) can be determined by a charge ratio when an olefin polymer and a functional group-containing organic compound are reacted in the presence of a radical initiator or the like, or by known means such as $^{13}$C NMR measurement or $^1$H NMR measurement. Specific NMR measurement conditions can be exemplified as follows.

$^1$H NMR measurement can be performed using an ECX400 type nuclear magnetic resonance apparatus manufactured by JEOL Ltd., with deuterated ortho-dichlorobenzene as a solvent, under the following conditions: the sample concentration is 20 mg/0.6 mL, the measurement temperature is 120°C, the observation nucleus is $^1$H (400 MHz), the sequence is a single pulse, the pulse width is 5.12 $\mu$s (45° pulse), the repetition time is 7.0 seconds, and the number of integrations is 500 or more. The reference chemical shift is set to 0 ppm for hydrogen in tetramethylsilane, but similar results can be obtained by setting the peak derived from the residual hydrogen in deuterated ortho-dichlorobenzene to 7.10 ppm as the reference value for the chemical shift. Peaks such as $^1$H derived from the functional group-containing compound are assigned by a conventional method.

The $^{13}$C NMR measurement can be performed using an ECP500 type nuclear magnetic resonance apparatus manufactured by JEOL Ltd. as a measurement apparatus, with a mixed solvent of ortho-dichlorobenzene/heavy benzene (80%/20% by volume) as a solvent, under the following conditions: the measurement temperature is 120°C, the observation nucleus is $^{13}$C (125 MHz), single pulse proton decoupling is used, 45° pulse is used, the repetition time is 5.5 seconds, the number of integrations is 10,000 or more, and the chemical shift reference value is 27.50 ppm. The assignment of various signals can be performed based on a conventional method, and the quantification can be performed based on the integrated value of the signal intensity.

On the other hand, the skeleton portion of the modified polyolefin resin (B) is preferably a structure derived from a polyolefin, and is preferably a known olefin polymer such as an ethylene-based polymer, a propylene-based polymer, a butene-based polymer, or a copolymer thereof. The skeleton portion of the olefin polymer is more preferably a copolymer of ethylene and an $\alpha$-olefin having 3 or more carbon atoms (hereinafter, also simply referred to as "ethylene/$\alpha$-olefin copolymer"). The olefin polymer may be a biomass-derived olefin polymer that at least partially includes a raw material derived from biomass.

Examples of the $\alpha$-olefin having 3 or more carbon atoms include propylene, 1-butene, 1-hexene, 4-methyl-1-pentene, 1-octene, 1-decene, and the like. Specific examples of the ethylene/$\alpha$-olefin copolymer include ethylene/propylene copolymer, ethylene/1-butene copolymer, ethylene/1-hexene copolymer, ethylene/1-octene copolymer, ethylene/4-methyl-1-pentene copolymer, and the like. Among these, ethylene/propylene copolymer, ethylene/1-butene copolymer, ethylene/4-methyl-1-pentene copolymer, ethylene/1-hexene copolymer, and ethylene/1-octene copolymer are preferable.

The ethylene/$\alpha$-olefin copolymer contains a constitutional unit derived from ethylene preferably in an amount of 70 to 99.5 mol% and more preferably in an amount of 80 to 99 mol% when the total number of moles of constitutional units contained in the ethylene/$\alpha$-olefin copolymer is 100 mol%. In addition, the ethylene/$\alpha$-olefin copolymer contains a constitutional unit derived from the $\alpha$-olefin preferably in an amount of 0.5 to 30 mol% and more preferably in an amount of 1 to 25 mol% when the total number of moles of constitutional units contained in the ethylene/$\alpha$-olefin copolymer is 100 mol%.

The ethylene/$\alpha$-olefin copolymer preferably has a melt flow rate (MFR) of 0.01 to 20 g/10 min, more preferably 0.05 to 20 g/10 min, and still more preferably 0.1 to 10 g/10 min, as measured at 190°C under a load of 2.16 kg according to ASTM D1238.

The modified polyolefin resin (B) can be obtained, for example, by reacting the olefin polymer described above with a compound having the functional group, in a specific ratio.

Preferred examples of the functional group-containing compound to be reacted with the olefin polymer include unsaturated carboxylic acids and derivatives thereof. Specific examples of the functional group-containing compound include unsaturated carboxylic acids such as acrylic acid, methacrylic acid, $\alpha$-ethylacrylic acid, maleic acid, fumaric acid, itaconic acid, citraconic acid, tetrahydrophthalic acid, methyl tetrahydrophthalic acid, and endo-cis-bicyclo[2,2,1]hept-5-ene-2,3-dicarboxylic acid (nadic acid [trademark]), and derivatives thereof such as acid halides, amides, imides, acid anhydrides, and esters, and the like. Among these, an unsaturated dicarboxylic acid or an acid anhydride thereof is suitable, and particularly, maleic acid, nadic acid (trademark), or an acid anhydride thereof is suitable.

The functional group-containing compound is preferably maleic anhydride. Maleic anhydride has a relatively high reactivity with the olefin polymer described above, undergoes little structural change due to polymerization or the like, and tends to be stable as a basic structure. For this reason, there are various advantages such as obtaining a modified polyolefin resin (B) with stable quality.

An example of a method for obtaining the modified polyolefin resin (B) by using an ethylene/$\alpha$-olefin copolymer includes a method referred to as graft modifying of the ethylene/$\alpha$-olefin copolymer with a functional group-containing compound that corresponds to a functional group constitutional unit.

The density of the modified polyolefin resin (B) is preferably 0.800 to 0.965 g/cm$^3$, more preferably 0.820 to 0.950 g/cm$^3$, and still more preferably 0.850 to 0.920 g/cm$^3$.

Furthermore, the intrinsic viscosity [$\eta$] of the modified polyolefin resin (B) measured in a 135°C decalin (decahydronaphthalene) solution is preferably 1.0 to 4.5 dl/g, and more preferably 1.2 to 3 dl/g. When the intrinsic viscosity [$\eta$] is within the above range, it is possible to achieve both high mechanical strength and high injection flowability of a resin composition.

The intrinsic viscosity [$\eta$] of the modified polyolefin resin (B) at 135°C in decalin is measured in the following manner based on a conventional method. A sample of 20 mg is dissolved in 15 ml of decalin, and the specific viscosity ($\eta$sp)

is measured in an atmosphere of 135°C using an Ubbelohde viscometer. After adding 5 ml of decalin to this decalin solution for dilution, the same specific viscosity measurement is performed. Based on the measurement results obtained by repeating the dilution operation and the viscosity measurement two more times, the "$\eta$sp/C" value when the concentration (C) is extrapolated to zero is used as the intrinsic viscosity [$\eta$].

The melt flow rate (MFR, in accordance with JIS K7210, at a temperature of 190°C and a load of 21.2 N) of the modified polyolefin resin (B) is preferably 0.01 to 20 g/10 min, more preferably 0.05 to 20 g/10 min, and further preferably 0.1 to 10 g/10 min. When the MFR is less than 0.01 g/10 min, the fluidity is poor, and when the MFR exceeds 20 g/10 min, the impact strength may become low depending on the shape of the molded article.

The content of the modified polyolefin resin (B) is 4.70% by mass or more and 20.00% by mass or less based on the sum of the mass of the polyamide resin (A) and the mass of the modified polyolefin resin (B). When the content is 4.70% by mass or more, it is possible to enhance the initial airtightness of the metal/resin joined body and the airtightness when the metal/resin joined body is repeatedly subjected to cold-heat shocks. When the content is 20.00% by mass or less, it is possible to blend a sufficient amount of the polyamide resin (A) in the resin composition to sufficiently exhibit various characteristics of the polyamide resin. From the above viewpoint, the content of the modified polyolefin resin (B) is preferably 4.70% by mass or more and 12.50% by mass or less, and more preferably 4.70% by mass or more and 8.00% by mass or less. By setting the content of the modified polyolefin resin (B) to 8.00% by mass or less, it is possible to enhance the moldability of the resin composition and to form a molded product with excellent mechanical properties such as tensile strength.

## 1-3. Nucleating agent (C)

The polyamide resin composition contains a nucleating agent (C) in addition to the polyamide resin (A) and the modified polyolefin resin (B). The nucleating agent (C) can promote the crystallization of the polyamide resin (A). The nucleating agent (C) can enhance the crystallinity of the resin member by promoting the crystallization of the polyamide resin (A) in the resin composition that has entered into the recesses on the surface of the metal member during the molding process of the resin member. Thus, it is possible to enhance the joining strength between the metal member and the resin member.

When the polyamide resin composition contains the nucleating agent (C) in addition to the polyamide resin (A), the crystallinity of the resin member obtained by molding the polyamide resin composition increases as described above. When the crystallinity of the resin member increases, the elongation of the resin member tends to decrease. When a temperature change is applied to a metal/resin joined body in which a metal member and a resin member are joined, stress is generated at an interface between the metal member and the resin member as a result of a difference in thermal expansion coefficients (linear expansion rates) between the metal member and the resin member. At this time, when the elongation of the resin member is low, peeling may occur at the interface between the metal member and the resin member, or cracks may occur in the resin member because of compressive stress. Accordingly, when the polyamide resin composition contains only the nucleating agent (C) in addition to the polyamide resin (A), the joining strength of the metal/resin joined body is improved, but on the other hand, the airtightness when cold-heat shocks are repeatedly applied may be decreased.

The polyamide resin composition according to the present embodiment, however, contains the modified polyolefin resin (B) in addition to the polyamide resin (A) and the nucleating agent (C). As described above, the modified polyolefin resin (B) decreases the elastic modulus of the polyamide resin composition and imparts flexibility to the resin member. It is considered that the airtightness can be maintained more satisfactorily when cold-heat shocks are repeatedly applied by making the resin member flexible. Accordingly, it is considered that the polyamide resin composition of the present embodiment can achieve both high joining strength and maintenance of airtightness when cold-heat shocks are repeatedly applied by containing the nucleating agent (C) and the modified polyolefin resin (B).

In addition, when the polyamide resin composition contains the modified polyolefin resin (B) in addition to the polyamide resin (A), the crystallization rate of the polyamide resin composition decreases, and flexibility is imparted to the resin member after molding, as described above. When the content of the modified polyolefin resin (B) is increased, the flexibility of the resin member after molding is further enhanced, and as a result, the airtightness can be maintained more effectively even when cold-heat shocks are repeatedly applied. However, in such a case, decrease in the crystallization rate of the polyamide resin composition is also promoted, the crystallinity of the resin member after molding is decreased and the joining strength between the metal member and the resin member is decreased. As described above, in a polyamide resin composition to which the modified polyolefin resin (B) is added, there is a trade-off relationship between the joining strength between a metal member and a resin member and the airtightness when cold-heat shocks are repeatedly applied, and it has been difficult to achieve both the joining strength and the airtightness.

The polyamide resin composition according to the present embodiment, however, contains the nucleating agent (C) in addition to the polyamide resin (A) and the modified polyolefin resin (B). The present inventors have found that the trade-off relationship described above can be overcome by adding the nucleating agent (C). That is, by adding the nucleating agent (C), it is possible to enhance the joining strength between a metal member and a resin member while maintaining high airtightness when cold-heat shocks are repeatedly applied in a polyamide resin composition containing a predetermined amount or more of the modified polyolefin resin (B).

Examples of the nucleating agent include metal salt-based compounds such as sodium 2,2-methylenebis(4,6-di-t-butylphenyl)phosphate, aluminum tris(p-t-butylbenzoate), and stearates, sorbitol-based compounds such as bis(p-methylbenzylidene)sorbitol and bis(4-ethylbenzylidene)sorbitol, and inorganic substances such as talc, calcium carbonate, and hydrotalcite. Among these, talc is preferred from the viewpoint of further increasing the crystallinity of a molded article. These nucleating agents may be used alone or in combination.

Talc generally contains hydrous magnesium silicate ($SiO_2$: 58% to 64%, MgO: 28% to 32%, $Al_2O_3$: 0.5% to 5%, or $Fe_2O_3$: 0.3% to 5%) as the main component thereof. The average particle diameter of talc is not particularly limited, but is preferably 1 to 15 $\mu$m. When the average particle diameter of talc is within the above range, it is easy to disperse talc in the polyamide resin (A) without impairing the fluidity of the polyamide resin composition. From the same viewpoint, the average particle diameter of talc is more preferably 1 to 7.5 $\mu$m. The average particle diameter of talc can be measured by a laser diffraction method, for example, a laser diffraction method using a Shimadzu particle size distribution measuring apparatus SALD-2000A type manufactured by Shimadzu Corporation.

The content of the nucleating agent is preferably 0.10 parts by mass or more and 5.00 parts by mass or less, and more preferably 0.10 parts by mass or more and 3.00 parts by mass or less, based on the total mass of the polyamide resin composition. When the content of the nucleating agent is within the above range, it is more likely to sufficiently increase the crystallinity of the molded article and to obtain sufficient mechanical strength.

1-4. Other components

The polyamide resin composition may include another known component.

Examples of the other components include lubricants, colorants, reinforcing materials, heat-resistant stabilizers, corrosion resistance improvers, drip inhibitors, ion trapping agents, elastomers (rubber), antistatic agents, release agents, antioxidants (phenols, amines, sulfur compounds, phosphorus compounds, and the like), heat-resistant stabilizers other than the above (lactone compounds, vitamin E, hydroquinones, and the like), light stabilizers (benzotriazoles, triazines, benzophenones, benzoates, hindered amines, oxanilides, and the like), and other polymers (polyolefins, olefin copolymers such as ethylene/propylene copolymers, ethylene/1-butene copolymers, and propylene/1-butene copolymers, polystyrene, polyamide, polycarbonate, polyacetal, polysulfone, polyphenylene oxide, fluororesins, silicone resins, LCP, and the like). Among these, the polyamide resin composition in the resin member preferably further includes a reinforcing material from the viewpoint of enhancing the mechanical strength of the molded article.

1-4-1. Lubricant

A lubricant enhances the injection flowability of the polyamide resin composition and improves the appearance of an obtained molded article. The lubricant may be a fatty acid metal salt such as a metal salt of an oxycarboxylic acid and a metal salt of a higher fatty acid.

The oxycarboxylic acid in the oxycarboxylic acid metal salt may be an aliphatic oxycarboxylic acid or an aromatic oxycarboxylic acid. Examples of the aliphatic oxycarboxylic acid include aliphatic oxycarboxylic acids having 10 or more and 30 or less carbon atoms, such as $\alpha$-hydroxymyristic acid, $\alpha$-hydroxypalmitic acid, $\alpha$-hydroxystearic acid, $\alpha$-hydroxyeicosanoic acid, $\alpha$-hydroxydocosanoic acid, $\alpha$-hydroxytetraeicosanoic acid, $\alpha$-hydroxyhexaeicosanoic acid, $\alpha$-hydroxyoctaeicosanoic acid, $\alpha$-hydroxytriacontanoic acid, $\beta$-hydroxymyristic acid, 10-hydroxydecanoic acid, 15-hydroxypentadecanoic acid, 16-hydroxyhexadecanoic acid, 12-hydroxystearic acid, and ricinoleic acid. Examples of the aromatic oxycarboxylic acid include salicylic acid, m-oxybenzoic acid, p-oxybenzoic acid, gallic acid, mandelic acid, and tropic acid.

Examples of the metal in the oxycarboxylic acid metal salt include alkali metals such as lithium, and alkaline earth metals such as magnesium, calcium, and barium.

Among these, the oxycarboxylic acid metal salt is preferably a metal salt of 12-hydroxystearic acid, and more preferably magnesium 12-hydroxystearate and calcium 12-hydroxystearate.

Examples of the higher fatty acid in the higher fatty acid metal salt include higher fatty acids having 15 or more and 30 or less carbon atoms such as stearic acid, oleic acid, behenic acid, behenic acid, and montanic acid.

Examples of metals in the higher fatty acid metal salt include calcium, magnesium, barium, lithium, aluminum, zinc, sodium, potassium, and the like.

Among these, the higher fatty acid metal salt is preferably calcium stearate, magnesium stearate, barium stearate, calcium behenate, sodium montanate, calcium montanate, or the like.

The content of the lubricant is preferably 0.01% by mass or more and 1.30% by mass or less based on the total mass of the polyamide resin composition. When the content of the lubricant is 0.01% by mass or more, the fluidity during molding tends to increase, and the appearance of the obtained molded article tends to improve. When the content of the lubricant is 1.30% by mass or less, gas generated by the decomposition of the lubricant is less likely to be generated during molding, and the appearance of the molded product is more likely to become satisfactory.

1-4-2. Colorant

A colorant imparts a desired color tone to a molded article. The colorant is not particularly limited, but may be a pigment. Examples of the pigment include inorganic pigments such as carbon black, alumina, titanium oxide, chromium oxide, iron oxide, zinc oxide, and barium sulfate, and organic pigments such as azo pigments, phthalocyanine pigments, quinacridone pigments, perylene pigments, anthraquinone pigments, thioindigo pigments, and indanthrene pigments.

The content of the colorant is preferably 0.01% by mass or more and 5.00% by mass or less and more preferably 0.10% by mass or more and 2.00% by mass or less, based on the total mass of the polyamide resin composition.

1-4-3. Reinforcing material

A reinforcing material can impart high mechanical strength to the polyamide resin composition. The reinforcing material may be an inorganic filler. Examples of the reinforcing material include glass fibers, fibrous reinforcing materials such as wollastonite, potassium titanate whiskers, calcium carbonate whiskers, aluminum borate whiskers, magnesium sulfate whiskers, zinc oxide whiskers, milled fibers, and cut fibers, and granular reinforcing materials. These reinforcing materials may be used alone or in combination. In particular, wollastonite, glass fibers, and potassium titanate whiskers are preferred, and wollastonite and glass fibers are more preferred, from the view point that these materials can easily increase the mechanical strength of the molded article.

The average fiber length of the fibrous reinforcing material can be, for example, 1 $\mu$m or more and 20 mm or less, preferably 5 $\mu$m or more and 10 mm or less, from the viewpoint of the moldability of the polyamide resin composition and the mechanical strength and heat resistance of the obtained molded article. The aspect ratio of the fibrous reinforcing material may be, for example, 5 or more and 2,000 or less, and preferably 30 or more and 600 or less.

The average fiber length and average fiber diameter of the fibrous reinforcing material can be measured by the following method.

1) After a polyamide resin composition is dissolved in a hexafluoroisopropanol/chloroform solution (0.1/0.9 vol%), the resulting liquid is filtered and the obtained residue is collected.

2) The residue obtained in the above-described step 1) is dispersed in water, and the fiber length (Li) and the fiber diameter (di) of each of randomly selected 300 fibers are measured with an optical microscope (magnification: 50$\times$). Then, qi is defined as the number of fibers whose fiber length is Li, and the weight average length (Lw) is calculated based on the following equation and used as the average fiber length of the fibrous reinforcing material.

$$\text{Weight average length (Lw)} = (\Sigma qi \times Li^2) / (\Sigma qi \times Li)$$

In the similar manner, ri is defined as the number of fibers whose fiber diameter is Di, and the weight average diameter (Dw) is calculated based on the following equation and used as the average fiber diameter of the fibrous reinforcing material.

$$\text{Weight average diameter (Dw)} = (\Sigma ri \times Di^2) / (\Sigma ri \times Di)$$

The content of the reinforcing material is not particularly limited, but can be, for example, 15% by mass or more and 70% by mass or less based on the total mass of the polyamide resin composition. From the viewpoint of preventing a decrease in the initial airtightness and the airtightness maintenance rate after repeating cold-heat shocks by adjusting the fluidity and the elastic modulus of the polyamide resin composition by the addition of the reinforcing material, the content of the reinforcing material is preferably 15% by mass or more and 50% by mass or less based on the total mass of the polyamide resin composition. However, even when a large amount of the reinforcing material is added, it is possible to sufficiently enhance the initial airtightness and the maintenance rate of the airtightness after repeating cold-heat shocks by adjusting the amount of the polyamide resin (A) and/or the amount of the modified polyolefin resin (B).

1-4-4. Heat-resistant stabilizer

A heat-resistant stabilizer can improve the fluidity of the polyamide resin composition during the molding of the resin member. This allows the resin composition in the resin member to sufficiently flow along the unevenness on the surface of the metal member, and to bring the polyamide resin composition into close contact with the unevenness. For this reason, it is considered that the heat-resistant stabilizer can further enhance the joining strength between the metal member and the resin member and can further enhance the airtightness.

The heat-resistant stabilizer includes the following: (i) a salt of a halogen and a Group 1 or Group 2 metal element of the periodic table (halogen metal salt), (ii) a copper compound, and optionally (iii) a higher fatty acid metal salt as necessary.

Examples of the halogen metal salt (i) include potassium iodide, potassium bromide, potassium chloride, sodium iodide, and sodium chloride. Among these, potassium iodide and potassium bromide are preferable. Only one type of halogen metal salt may be included, or two or more types may be included.

Examples of the copper compound (ii) include copper halides, copper salts (such as sulfates, acetates, propionates, benzoates, adipates, terephthalates, salicylates, nicotinates, and stearates), and copper chelate compounds (such as compounds of copper with ethylenediamine or ethylenediaminetetraacetic acid). Among these, copper iodide, copper(I) bromide, copper(II) bromide, copper(I) chloride, and copper acetate are preferable. Only one type of copper compound may be included, or two or more types may be included.

The content mass ratio of the halogen metal salt (i) and the copper compound (ii) can be adjusted such that the molar ratio betwen halogen and copper is 0.1/1 to 200/1, and preferably 0.5/1 to 100/1, and more preferably 2/1 to 40/1, from the viewpoint of being more likely to improve the heat resistance of the molded article and the corrosion resistance during production.

Examples of the higher fatty acid metal salt (iii) include higher saturated fatty acid metal salts and higher unsaturated fatty acid metal salts.

The higher saturated fatty acid metal salt is preferably a metal salt of a saturated fatty acid having 6 to 22 carbon atoms and a metal element (M1) such as a Group 1, 2, or 3 element of the periodic table, zinc, or aluminum. Such a higher saturated fatty acid metal salt is represented by the following formula (1).

$$CH_3(CH_2)_nCOO(M1) \dots \qquad (1)$$

(In formula (1), metal element (M1) is a Group 1, 2, or 3 element of the periodic table, zinc, or aluminum, and n may be 8 to 30.)

Examples of the higher saturated fatty acid metal salt include lithium salts, sodium salts, magnesium salts, calcium salts, zinc salts, and aluminum salts of capric acid, undecanoic acid, lauric acid, tridecanoic acid, myristic acid, pentadecanoic acid, palmitic acid, heptadecanoic acid, stearic acid, nonadecanoic acid, arachidic acid, behenic acid, lignoceric acid, cerotic acid, heptacosanoic acid, montanic acid, melissic acid, and lacceric acid.

The higher unsaturated fatty acid metal salt is preferably a metal salt of an unsaturated fatty acid having 6 to 22 carbon atoms and a metal element (M1) such as a Group 1, 2, or 3 element of the periodic table, zinc, or aluminum.

Examples of the higher unsaturated fatty acid metal salt include lithium salts, sodium salts, magnesium salts, calcium salts, zinc salts, and aluminum salts of undecylenic acid, oleic acid, elaidic acid, cetoleic acid, erucic acid, brassidic acid, sorbic acid, linoleic acid, linolenic acid, arachidonic acid, stearolic acid, 2-hexadecenoic acid, 7-hexadecenoic acid, 9-hexadecenoic acid, gadoleic acid, gadelaidic acid, and 11-eicosenoic acid.

Examples of the copper-based heat-resistant stabilizer include a mixture of 10% by mass of copper (I) iodide and 90% by mass of potassium iodide, a mixture of 14.3% by mass of copper (I) iodide and 85.7% by mass of potassium iodide/calcium distearate (mass ratio of 98:2), and the like.

According to the findings of the present inventors, a copper-based heat-resistant stabilizer may generate gas when cold-heat shocks are repeatedly applied, which may decrease the maintenance rate of airtightness. From the viewpoint of preventing a decrease in airtightness when cold-heat shocks are repeatedly applied, the content of the copper-based heat-resistant stabilizer is preferably 0.30% by mass or less, more preferably 0.10% by mass or less, and still more preferably less than 0.01% by mass, based on the total mass of the polyamide resin composition.

1-5. Production method

The polyamide resin composition can be produced by a method of mixing the above-described polyamide resin and, if necessary, another component by a known resin kneading method, such as a Henschel mixer, V-blender, ribbon blender, or tumbler blender, or by a method of performing mixing, then further melt-kneading with a uniaxial extruder, multiaxial extruder, kneader, or Banbury mixer, and then granulating or pulverizing.

2. Metal/resin joined body

Embodiment 2 of the present invention relates to a metal/resin joined body in which a resin member including the above-described polyamide resin composition is joined to a surface of a metal member.

2-1. Resin member

The resin member includes the polyamide resin composition described above. The proportion of the polyamide resin composition in the total mass of the resin member is preferably 50.00% by mass or more, more preferably 60.00% by mass or more, and still more preferably 70.00% by mass or more. The upper limit of the proportion of the polyamide resin composition in the total mass of the resin member is not particularly limited, but can be 100.00% by mass or less, may be 90.00% by mass or less, or may be 80.00% by mass or less.

2-2. Metal member

As long as the metal member is a member made of metal, the material and shape thereof are not particularly limited. For example, the material of the metal member may be iron, copper, nickel, gold, silver, platinum, cobalt, zinc, lead, tin, titanium, chromium, aluminum, magnesium, manganese, or an alloy such as stainless steel, brass, or phosphor bronze.

These materials can be selected according to the application of the metal/resin joined body. For example, when thermal conductivity is required, aluminum, an aluminum alloy, magnesium, a magnesium alloy, copper, and a copper alloy are preferred, and the copper and the copper alloy are more preferable. In addition, when weight reduction and satisfactory strength are required, aluminum, an aluminum alloy, magnesium, and a magnesium alloy are preferable.

The surface of the metal member is preferably subjected to a roughening treatment. The method for roughening treatment of the surface is not particularly limited, and the surface may be subjected to roughening treatment by a chemical treatment such as immersion in a treatment liquid containing a base or an acid or etching, or by a physical treatment such as laser or blasting.

It is preferable that the center-to-center distance (pitch) of a plurality of protrusions formed by the roughening treatment on the surface of the roughened metal member is 5 nm or more and 500 $\mu$m or less. When the center-to-center distance of the plurality of protrusions is 5 nm or more, recesses between the protrusions are appropriately large, making it easy to cause the resin member to sufficiently enter into the recesses during joining, thereby further improving the joining strength between the metal member and the resin member. In addition, when the center-to-center distance of the plurality of protruding sections is 500 $\mu$m or less, the recesses do not become too large, thereby further preventing a gap from being generated at the metal-resin interface of the metal/resin joined body and further enhancing the airtightness. From the same viewpoint, the center-to-center distance of the plurality of protrusions is more preferably 5 $\mu$m or more and 250 $\mu$m or less. The center-to-center distance of the plurality of protrusions is an average value obtained from the distance between the center of one protrusion and the center of a protrusion adjacent to thereof.

The center-to-center distance of the plurality of protrusions can be measured by removing a resin member from a metal/resin joined body by mechanical peeling, solvent washing, or the like, and observing the surface of the exposed metal member by using an electron microscope, a laser microscope, or a surface roughness measuring apparatus.

Specifically, when the center-to-center distance of the plurality of protrusions is less than 0.5 $\mu$m, it is possible to observe the protrusions using an electron microscope. When the center-to-center distance of the plurality of protrusions is 0.5 $\mu$m or more, it is possible to observe the protrusions using a laser microscope or a surface roughness measuring apparatus. For example, in a photograph of the surface of a metal member taken with an electron microscope or a laser microscope, 50 protrusions are randomly selected, and the center-to-center distances for the protrusions are measured. Then, after integrating all the measured values of the center-to-center distances for the protrusions, a value obtained by dividing the integrated value by 50 (averaged value) is used as the "center-to-center distance of a plurality of protrusions."

The average value of the ten-point average roughness (Rz) at an evaluation length of 4 mm on the surface of the metal member that has been subjected to the roughening treatment is not particularly limited, but is preferably more than 2 $\mu$m, more preferably more than 2 $\mu$m and 50 $\mu$m or less, and still more preferably more than 2.5 $\mu$m and 45 $\mu$m or less.

The average value of the ten-point average roughness (Rz) can be measured in accordance with JIS B0601 (ISO 4287). Specifically, the ten-point average roughness (Rz) on a total of six straight line portions, including three arbitrary straight line portions parallel to each other and three arbitrary straight line portions orthogonal to the three straight line portions, is measured, and the average value from the measured ten-point average roughness is used as the average value of Rz.

The average length (RSm) of the roughness curve element on the surface of the metal member subjected to the roughening treatment is preferably 0.5 $\mu$m or more and 500 $\mu$m or less. In particular, from the viewpoint of further increasing the joining strength, it is preferable that the center-to-center distance of a plurality of protrusions is less than 0.5 $\mu$m, and the average length (RSm) of the roughness curve element is 0.5 $\mu$m or more and 500 $\mu$m or less. The average length of the roughness curve element can also be measured in the same manner as described above, in accordance with JIS B0601 (ISO 4287).

3. Method for producing metal/resin joined body

Embodiment 2 of the present invention relates to a method for producing the metal/resin joined body described above. The method for producing a metal/resin joined body is not particularly limited, but includes, for example, (1) a step of preparing a metal member, (2) a step of bringing a molten polyamide resin composition into contact with the surface of the metal member, and (3) a step of cooling the contacted polyamide resin composition. The step (1) of preparing a metal member may include a step of performing roughening treatment of the surface of the metal member.

3-1. Preparation of metal member

First, the metal member described above is prepared. At this time, at least a part of the surface of the metal member may be subjected to a roughening treatment, or a metal member having an uneven structure on at least a part of the surface may be prepared.

The method for performing roughening treatment of the surface of the metal member is not particularly limited. For example, the following can be used: a method using laser processing, a method of immersing a metal member in an aqueous inorganic base solution such as NaOH or an aqueous inorganic acid solution such as HCl or $HNO_3$, a method of treating a metal member by anodization, a displacement crystallization method of etching using an acid-based etchant (preferably, an aqueous acid-based etchant solution containing an inorganic acid, a second iron ion, a second copper ion, and, as necessary, a manganese ion, aluminum chloride hexahydrate, sodium chloride, and the like), a method of immersing a metal member in an aqueous solution such as hydrazine hydrate, ammonia, and a watersoluble amine compound, a method of hot water treatment, or the like.

3-2. Joining of resin member

Next, a softened or molten polyamide resin composition is brought into contact with the surface (preferably, the surface subjected to the roughening treatment) of the prepared metal member.

The method of the contacting is not particularly limited, and may be performed by a known method such as injection molding (insert molding). For example, the prepared metal member is disposed in a cavity section (space section) in an injection molding die. Then, the polyamide resin composition is injected into the cavity section of the die such that at least a part of the polyamide resin composition comes into contact with the surface of the metal member subjected to the roughening treatment. As a result, the injected molten polyamide resin composition comes into contact with the surface of the metal member. The temperature of the injection molding die at this time may be any temperature at which the polyamide resin composition can be melted into a state suitable for injection molding, and is not particularly limited, but may be, for example, 100°C to 350°C.

As the mold (die), a known injection molding mold, for example, a mold for rapid heat cycle molding (RHCM, heat & cool molding) or a core-back mold for foam molding can be used.

3-3. Cooling

Subsequently, by cooling and solidifying the polyamide resin composition that has come into contact with the surface of the metal member, it is possible to obtain a metal/resin joined body in which a resin member including the polyamide resin composition is joined to the surface of the metal member.

4. Application

The above-described metal/resin joined body is suitably used for various applications in which the metal/resin joined body is currently being used or in which the use of the metal/resin joined body is being considered.

Examples of the application include structural components for vehicles, vehicle-mounted accessories, housings for electronic devices, housings for home appliances, structural components, machine components, various automobile components, components for electronic devices, furniture, household goods such as kitchen utensils, medical devices, components for building materials, other structural components, components for exterior applications, and the like.

More specifically, examples of the application include, in the case of vehicle-related applications, instrument panels, console boxes, door knobs, door trims, shift levers, pedals, glove boxes, bumpers, bonnets, fenders, trunks, doors, roofs, pillars, seats, steering wheels, bus bars, terminals, motors, power conversion apparatuses (inverters and converters), ECU boxes, electrical components, engine peripheral components, drive system/gear peripheral components, intake/exhaust system components, cooling system components, and the like. In addition, precision electronic components such as connectors, relays, and gears are included.

In addition, the metal/resin joined body can be used in a component for equipment that optimally designs heat management by combining the high thermal conductivity of a copper member and the heat insulating property of a resin member, for example, various home appliances. Examples of the above application include home appliances such as refrigerators, washing machines, vacuum cleaners, microwave ovens, air conditioners, lighting apparatuses, electric water heaters, televisions, clocks, ventilation fans, projectors, and speakers, and electronic information apparatuses such as personal computers, mobile phones, smartphones, digital cameras, tablet PCs, portable music players, portable game machines, chargers, and batteries, and the like.

Examples of other applications include components for lithium-ion secondary batteries, robots, and the like.

For example, the metal/resin joined body can be used in a bus bar unit for a moving object (vehicle) such as an automobile.

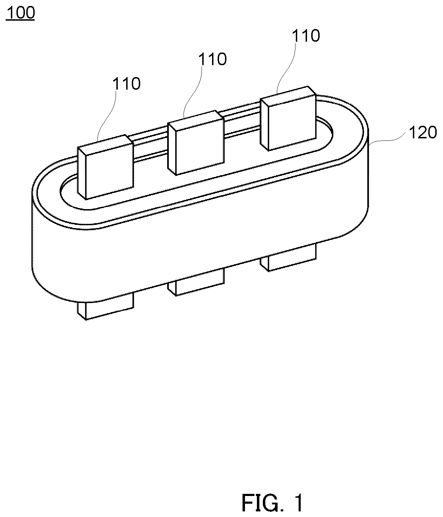

FIG. 1 is a schematic view illustrating an exemplary form of the metal/resin joined body as a bus bar unit. Bus bar unit 100 includes bus bars 110, each of which is a conductor for supplying current to a corresponding member and is a conductive metal member (for example, a copper metal member), and holding member 120, which is a resin member described above and serves as a protection member for protecting bus bars 110.

A surface of bus bar 110 (namely, a metal member) that is to be in contact with holding member 120 and is a portion of the entire surface of the of bus bar is subjected to a roughening treatment. Holding member 120, which is a resin member (resin member including a molded article of a polyamide resin composition), is joined to the surface subjected to the roughening treatment.

Bus bar unit 100 can be used to electrically connect, via bus bar 110, a motor of a moving object with an inverter that controls the power supplied to the motor .

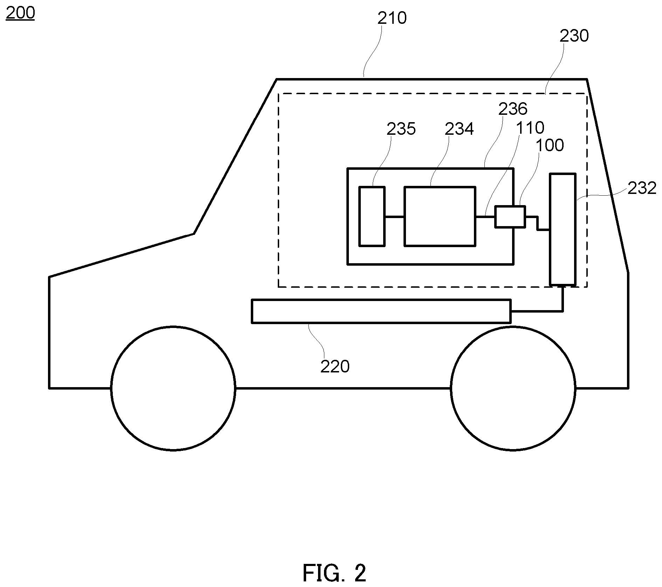

FIG. 2 is a configuration diagram illustrating an exemplary configuration of a moving object (vehicle) including bus bar unit 100. Moving object 200 includes machine body 210, power source 220 such as a secondary battery that supplies power for driving machine body 210, and drive unit 230 that drives machine body 210 with the power supplied from power source 220.

Drive unit 230 includes inverter 232 that controls power (current) from power source 220, motor 234 that rotates by receiving the power controlled by inverter 232, and bus bar unit 100 that includes bus bar 110 that connects inverter 232 with motor 234. Motor 234 is housed in motor case 236 together with reduction gear 235 that converts the rotation speed obtained by motor 234 into a rotation speed for driving machine body 210. Bus bar unit 100 is attached to motor case 236, and bus bar 110 extends from the inside to the outside of motor case 236 through bus bar unit 100.

A cooling liquid (coolant oil) for cooling motor 234 is stored inside motor case 236. In addition, at the connection portion between bus bar unit 100 and motor case 236, an airtight treatment is performed by a sealing member such as an O-ring, thereby preventing oil from leaking from the inside to the outside of motor case 236.

The following may occur in a conventional bus bar unit: when cold-heat shocks are repeatedly applied due to the heat of motor 234, the airtightness between the bus bar and the resin protection member decreases, and oil leaks from a gap between the bus bar and the protection member. In contrast, in the present embodiment, holding member 120 (which is composed of a resin member including a molded article of the above-described polyamide resin composition) is joined to bus bar 110, namely a conductive metal member (for example, a copper metal member). Therefore, even when cold-heat shocks due to the heat of motor 234 are repeatedly applied, the airtightness maintenance rate is high, and oil leakage can be prevented over a long period of time.

FIG. 2 illustrates an example in which moving object 200 is a vehicle such as an automobile, but moving object 200 is not particularly limited as long as it is an object that is movable and includes a machine body and a drive unit. For example, in addition to the vehicle such as an automobile, a bike, and an electric bicycle, a railroad car, a ship, an aircraft, a drone, a robot, or the like may also be used as moving object 200.

Examples

Hereinafter, the present invention will be described with reference to Examples. The scope of the present invention is not interpreted to be limited by the Examples.

In the following experiments, the physical properties of each resin were measured by the methods below.

(Melting point (Tm), glass transition temperature (Tg))

The melting point (Tm) and the glass transition temperature (Tg) of a polyamide resin were measured using a differential scanning calorimetry (DSC220C, manufactured by Seiko Instruments Inc.). Specifically, approximately 5 mg of a polyamide resin was sealed in an aluminum pan for measurement, set for differential scanning calorimetry, and heated from room temperature to 350°C at the rate of 10°C/min. To completely melt the resin, the resin was held at 350°C for 3 minutes, and then cooled to 30°C at a rate of 10°C/min. After the resin was allowed to stand at 30°C for 5 minutes, the second heating was performed at 10°C/min to 350°C. The endothermic peak temperature (°C) in this second heating was used as the melting point (Tm) of the polyamide resin, and the displacement point corresponding to the glass transition was used as the glass transition temperature (Tg).

(Feat of fusion (ΔH))

The heat of fusion (ΔH) of a polyamide resin was determined from the area of the endothermic peak of crystallization during the first heating process in accordance with JIS K7122 (2012).

(Intrinsic viscosity [η])

The intrinsic viscosity [η] of a polyamide resin was obtained as follows: 0.5 g of the polyamide resin was dissolved in 50 ml of 96.5% sulfuric acid solution to prepare a sample solution, the falling time of the sample solution was measured with an Ubbelohde viscometer at 25 ± 0.05°C, and the intrinsic viscosity was calculated based on the equation "[η] = ηSP / (C(1 + 0.205ηSP))."

[η]: Intrinsic viscosity (dl/g)
ηSP: Specific viscosity
C: Sample concentration (g/dl)
t: Falling time of sample solution (seconds)
t0: Falling time of blank sulfuric acid (seconds)

$$\eta SP = (t - t0) / t0$$

(Composition)

The composition of a modified polyolefin resin, specifically the content ratios (mol%) of ethylene and α-olefin having 3 or more carbon atoms, as well as the content ratio (% by mass) of the functional group constitutional unit, were measured by $^{13}$C-NMR. The measurement conditions are as follows.

Measurement apparatus: Nuclear magnetic resonance apparatus (ECP500, manufactured by JEOL Ltd.)
Observation nucleus: $^{13}$C (125 MHz)
Sequence: Single pulse proton decoupling
Pulse width: 4.7 μs (45° pulse)
Repetition time: 5.5 seconds
Number of integrations: 10,000 times or more
Solvent: Mixed solvent of ortho-dichlorobenzene/deuterated benzene (volume ratio: 80/20)
Sample concentration: 55 mg/0.6 mL
Measurement temperature: 120°C
Chemical shift reference value: 27.50 ppm

(Density)

The density of the modified polyolefin resin was measured at a temperature of 23°C using a density gradient tube in accordance with JIS K7112.

(Melt flow rate (MFR))

The melt flow rate (MFR) of the modified polyolefin resin was measured in accordance with ASTM D1238 under a load of 2.16 kg at 190°C. The unit of the melt flow rate is g/10 min.

(Melting point)

The melting point of the modified polyolefin resin was measured by differential scanning calorimetry (DSC).

1. Synthesis/preparation of material

1-1. Synthesis of polyamide Resin (A)

1-1-1. Polyamide resin (A-1)

Into an autoclave with a capacity of 13.6 L, 2,800 g of 1,6-hexanediamine (24.1 mol), 2,774 g of terephthalic acid (16.7 mol), 1,196 g of isophthalic acid (7.2 mol), 36.6 g of benzoic acid (0.30 mol), 5.7 g of sodium hypophosphite monohydrate, and 545 g of distilled water were charged and the autoclave was purged with nitrogen. Stirring was started from 190°C, and the internal temperature of the autoclave was raised to 250°C over 3 hours. At this time, the internal pressure of the autoclave was increased to 3.03 MPa. After continuing the reaction for one hour, releasing into the atmosphere through a spray nozzle installed at the bottom of the autoclave was performed and the low-order condensate was extracted. Subsequently, the low-order condensate was cooled to room temperature, pulverized to have a particle size of 1.5 mm or less using a pulverizer, and dried at 110°C for 24 hours. The obtained low-order condensate had a water content of 4,100 ppm, and an intrinsic viscosity [η] of 0.15 dl/g.

Next, this low-order condensate was placed in a solid phase polymerization apparatus with shelves, and after purging with nitrogen, the temperature was increased to 180°C over about 1 hour and 30 minutes. After the reaction was carried out for 1 hour and 30 minutes, the temperature was lowered to room temperature. The obtained prepolymer had an intrinsic viscosity [η] of 0.20 dl/g.

Subsequently, the obtained prepolymer was subjected to melt polymerization in a twin-screw extruder with a screw diameter of 30 mm and an L/D of 36, at a barrel set temperature of 330°C, a screw rotation speed of 200 rpm, and a resin supply rate of 6 kg/h, to obtain a polyamide resin (A-1).

The obtained polyamide resin (A-1) had an intrinsic viscosity of 1.0 dl/g, a melting point (Tm) of 330°C, a glass transition temperature (Tg) of 125°C, and a heat of fusion (ΔH) of 50 J/g.

1-1-2. Polyamide resin (A-2)

A polyamide resin (A-2) was obtained in the same manner as the synthesis of the polyamide resin (A-1) except that the raw materials were changed to 2,184 g (13.1 mol) of terephthalic acid, 2,800 g (24.1 mol) of 1,6-hexanediamine, and 1,572 g (10.8 mol) of adipic acid.

The obtained polyamide resin (A-2) had an intrinsic viscosity [η] of 0.8 dl/g, a melting point (Tm) of 310°C, a glass transition temperature (Tg) of 85°C, and a heat of fusion (ΔH) of 50 J/g.

1-1-3. Polyamide resin (A-3)

A polyamide resin (A-3) was obtained in the same manner as in the synthesis of the polyamide resin (A-1) except that the raw materials were changed to 1,720 g (10.4 mol) of terephthalic acid, 2,800 g (24.1 mol) of 1,6-hexanediamine, and 1,849 g (12.7 mol) of adipic acid.

The obtained polyamide resin (A-3) had an intrinsic viscosity [η] of 0.9 dl/g, a melting point (Tm) of 295°C, a glass transition temperature (Tg) of 75°C, and a heat of fusion (ΔH) of 60 J/g.

1-1-4. PolyamiderResin (A-4)

A polyamide resin (A-4) was obtained in the same manner as in the synthesis of the polyamide resin (A-1) except that the raw materials were changed to 3,655 g (22.0 mol) of terephthalic acid, 1,312 g (11.3 mol) of 1,6-diaminohexane, and 1,312 g (11.3 mol) of 2-methyl-1,5-diaminopentane.

The obtained polyamide resin (A-4) had an intrinsic viscosity [η] of 0.9 dl/g, a melting point (Tm) of 300°C, a glass transition temperature (Tg) of 140°C, and a heat of fusion (ΔH) of 40 J/g.

1-1-5. Polyamide resin (A-5)

UBESTA 3014B manufactured by UBE Corporation was used as a polyamide resin (A-5).

The polyamide resin (A-5) had an intrinsic viscosity [η] of 0.54 dl/g, a melting point (Tm) of 180°C, a glass transition temperature (Tg) of 50°C, and a heat of fusion (ΔH) of 60 J/g.

1-1-6. Polyamide resin (A-6)

A polyamide resin (A-6) was obtained in the same manner as the synthesis of the polyamide resin (A-1) except that the raw materials were changed to 2,774 g (16.7 mol) of isophthalic acid, 2,800 g (24.1 mol) of 1,6-diaminohexane, and 1,196 g (7.2 mol) of terephthalic acid.

The obtained polyamide resin (A-6) had an intrinsic viscosity [η] of 0.54 dl/g, a glass transition temperature (Tg) of 125°C, and a heat of fusion (ΔH) of 0 J/g, and no melting point (Tm) was measured.

1-2. Synthesis of modified polyolefin resin (B)

Into a glass flask that had been sufficiently purged with nitrogen, 0.63 mg of bis(1,3-dimethylcyclopentadienyl) zirconium dichloride was placed, and 1.57 ml of a toluene solution of methylaluminoxane (Al; 0.13 mmol/liter) and 2.43 ml of toluene were further added to the glass flask to obtain a catalyst solution. Next, 912 ml of hexane and 320 ml of 1-butene were introduced into a stainless steel autoclave with an internal volume of 2 liters, which had been sufficiently purged with nitrogen, and the temperature in the system was raised to 80°C. Subsequently, 0.9 mmol of triisobutylaluminum and 2.0 ml of the catalyst solution prepared above (0.0005 mmol as Zr) were pressurized into the system with ethylene, and the polymerization reaction was initiated. By continuously supplying ethylene, the total pressure was maintained at 8.0 kg/cm2-G, and polymerization was carried out at 80°C for 30 minutes. After introducing a small amount of ethanol into the system to stop the polymerization, the unreacted ethylene was purged. The obtained solution was dropped into a large excess of methanol to precipitate a white solid. The white solid was recovered by filtration, dried overnight under reduced pressure, and a white solid (ethylene/1-butene copolymer) was obtained.

The ethylene content of the ethylene/1-butene copolymer was 81 mol%. In addition, the ethylene/1-butene copolymer had a density of 0.860 g/cm$^3$, a MFR (ASTM D 1238, 190°C, 2.16 kg load) of 0.5 g/10 min, and a melting point of 35°C.

To 100 parts by mass of the obtained ethylene/1-butene copolymer, 1.0 part by mass of maleic anhydride and 0.04 parts by mass of peroxide (Perhexyne 25B, trademark, manufactured by NOF Corporation) were mixed. The obtained mixture was subjected to melt graft modification in a twin-screw extruder set to 230°C, thereby obtaining a modified polyolefin resin (B).

The maleic anhydride graft amount of the modified polyolefin resin (B) was 0.8% by mass. In addition, the modified polyolefin resin (B) had a density of 0.866 g/cm$^3$, a MFR (ASTM D 1238, 190°C, 2.16 kg load) of 0.27 g/10 min, and a melting point (Tm) of 35°C.

1-3. Other components

1-3-1. Nucleating Agent (C)

Talc (average particle diameter of 6 $\mu$m) was used as a nucleating agent.

1-3-2. Lubricant

Sodium montanate was used as a lubricant.

1-3-3. Colorant

A masterbatch containing a pigment was used as a colorant.

1-3-4. Reinforcing material

Glass fiber (manufactured by Owens Corning, FT2A) was used as a reinforcing material.

1-3-5. Copper-based heat-resistant stabilizer

A mixture of 10% by mass of copper (I) iodide and 90% by mass of potassium iodide was used as a copper-based heat-resistant stabilizer.

2. Production of metal/resin joined body

2-1. Preparation of polyamide resin composition

The above materials were mixed in a tumbler blender at the composition ratio (unit: parts by mass) as indicated in Table 1, and melt-kneaded with a 30 mm$\varphi$ vented twin screw extruder at a cylinder temperature of 300 to 335°C. The resulting kneaded product was extruded into strands and cooled in a water bath. The strands were then collected by a pelletizer and cut to obtain a polyamide resin composition in the form of pellets.

2-2. Production of roughening-treated copper member

A copper alloy plate (thickness 2 mm) of alloy number C1100 defined in JIS H3100:2012 was cut to have a length of 45 mm and a width of 18 mm to produce a copper member. The copper member after degreasing was immersed in a chemical etchant (Amalpha A-10201H, manufactured by MEC Co., Ltd.), washed with water, and immersed in a chemical etchant in this order. Immediately thereafter, the treated member was immersed in the chemical etching agent for 4 minutes. Next, water washing, alkali washing (5% by mass NaOH, 20 seconds immersion), water washing, neutralization treatment (5% by mass $H_2SO_4$, 20 seconds immersion), water washing, rust prevention treatment (A-10290, 1 minute), and water washing were performed in this order.

2-3. Production of metal/resin joined body

A copper member that has been subjected to the roughening treatment was placed in a small dumbbell metal insert mold attached to an injection molding machine (J55-AD, manufactured by The Japan Steel Works, Ltd.). Next, each of the polyamide resin compositions described above were injection-molded into a mold under the conditions of a cylinder temperature of 335°C, a mold temperature of 170°C, a primary injection pressure of 90 MPa, a holding pressure of 80 MPa, and an injection speed of 25 mm/second, thereby producing a test piece in which a resin member made of polyamide resin was joined to the surface of a copper member. The joining area between the copper member and the resin member of this test piece was 50 mm$^2$.

3. Evaluation

The obtained metal/resin joined body was evaluated according to the following criteria.

3-1. Airtightness (initial)

The helium leakage of a produced test piece was evaluated by a method in accordance with ISO 19095. Specifically, the test piece was set in a dedicated jig that can be sealed, He gas was applied to the sealed space at a pressure of 0.1 MPa, and the He gas that passed through the test piece was measured by a sniffer method using a He gas detector (HELEN M-222LD, manufactured by Canon Anelva Corporation). The airtightness was evaluated by the following criteria based on the detected He gas flow rate (leak amount) five minutes after the start of detection.

⊚: Detected He gas flow rate is $1 \times 10^{-6}$ Pa·m$^3$/s or less.
○: Detected He gas flow rate is more than $1 \times 10^{-6}$ Pa·m$^3$/s and $1 \times 10^{-5}$ Pa·m$^3$/s or less.
×: Detected He gas flow rate is more than $1 \times 10^{-5}$ Pa·m$^3$/s.

3-2. Airtightness (after cold-heat shock test (500 times and 1,000 times))

The He leakage of the test piece after the cold-heat shock test was evaluated by a method in accordance with ISO 19095. Specifically, a cold-heat shock test was performed on the prepared test piece using a cooling and heating cycle under the following conditions, and the subsequent helium leak amount was measured in the same manner as the initial airtightness evaluation described above. The airtightness after the cold-heat shock test was also evaluated based on the same criteria as the airtightness (initial).

(Conditions of cold-heat shock test)

Temperature range: -40°C to 150°C
Cycle condition: 30 minutes retention at each of -40°C and 150°C is reciprocated
Number of cycles: 500 times and 1,000 times

3-3. Fluidity

Each polyamide resin composition was injected using a bar flow mold with a width of 10 mm and a thickness of 0.5 mm under the following conditions, and the flow length (mm) of the resin composition in the mold was measured.

Injection molding machine: Tuparl TR40S3A, manufactured by Sodick Co., Ltd.

Injection setting pressure: 2,000 kg/cm$^2$
Cylinder setting temperature: melting point of polyamide resin + 10°C
Mold temperature: 160°C (Examples 1 to 3, 6 to 10, Comparative Examples 1 to 5), 120°C (Examples 4 and 5)

3-4. Tensile strength

Each polyamide resin composition was injected under the following conditions to obtain an ISO dumbbell-shaped test piece Type A with a thickness of 4.0 mm.

Molding machine: SG50M3, manufactured by Sumitomo Heavy Industries, Ltd.
Molding machine cylinder temperature: melting point of polyamide resin + 10°C
Mold temperature: 160°C (Examples 1 to 3, 6 to 10, Comparative Examples 1 to 5), 120°C (Examples 4 and 5)

The obtained test piece was left to stand at a temperature of 23°C in a nitrogen atmosphere for 24 hours. Next, a tensile test was performed in an atmosphere at a temperature of 23°C and a relative humidity of 50% in accordance with ASTM D638, and the tensile strength was measured.

3-5. Bending elastic modulus

Each polyamide resin composition was injected under the following conditions to obtain an ISO dumbbell-shaped test piece Type A with a thickness of 4.0 mm.

Molding machine: Tuparl TR40S3A, manufactured by Sodick Co., Ltd.
Molding machine cylinder temperature: melting point of polyamide resin + 10°C
Mold temperature: 160°C (Examples 1 to 3, 6 to 10, Comparative Examples 1 to 5), 120°C (Examples 4 and 5)

The obtained test piece was left to stand at a temperature of 23°C in a nitrogen atmosphere for 24 hours. Next, a bending test was performed in an atmosphere at a temperature of 23°C and a relative humidity of 50% using a bending tester (AB5, manufactured by NTESCO Co., Ltd.) with span 51 mm and bending speed 12.7 mm/min, and the elastic modulus was measured.

The composition of the prepared polyamide resin compositions, and the evaluation results of the airtightness (initial) and airtightness (after cold-heat shock test) of the metal/resin joined bodies, and the fluidity, tensile strength, and bending elastic modulus of the polyamide resin compositions are shown in Tables 1 to 3.

[Table 1]

| | | Unit | Example 1 | Example 2 | Example 3 | Example 4 | Example 5 |
|---|---|---|---|---|---|---|---|
| Composition | Polyamide resin (A-1) | wt% | 48.52 | 46.92 | 44.92 | 0 | 0 |
| | Polyamide resin (A-2) | wt% | 0 | 0 | 0 | 41.05 | 0 |
| | Polyamide resin (A-3) | wt% | 0 | 0 | 0 | 0 | 41.05 |
| | Polyamide resin (A-4) | wt% | 0 | 0 | 0 | 0 | 0 |
| | Polyamide resin (A-5) | wt% | 0 | 0 | 0 | 0 | 0 |
| | Polyamide resin (A-6) | wt% | 12.13 | 11.73 | 11.23 | 17.60 | 17.60 |
| | Modified polyolefin resin (B) | wt% | 3.00 | 5.00 | 7.50 | 5.00 | 5.00 |
| | Nucleating agent (C) | wt% | 0.35 | 0.35 | 0.35 | 0.35 | 0.35 |
| | Lubricant | wt% | 0.25 | 0.25 | 0.25 | 0.25 | 0.25 |
| | Colorant | wt% | 0.75 | 0.75 | 0.75 | 0.75 | 0.75 |
| | Reinforcing material | wt% | 35.00 | 35.00 | 35.00 | 35.00 | 35.00 |
| | Copper-based heat-resistant stabilizer | wt% | 0 | 0 | 0 | 0 | 0 |
| | (B)/((A)+(B))*100 | | 4.71 | 7.86 | 11.78 | 7.86 | 7.86 |
| Results | Airtightness (initial) | | ◎ | ◎ | ◎ | ◎ | ◎ |
| | Airtightness (after cold-heat shocks, 500 times) | | ◎ | ◎ | ◎ | ◎ | ◎ |
| | Airtightness (after cold-heat shocks, 1,000 times) | | ◎ | ◎ | ◎ | ◎ | ◎ |
| | Fluidity | mm | 35 | 33 | 31 | 56 | 34 |
| | Tensile strength | MPa | 240 | 220 | 210 | 220 | 220 |
| | Bending elastic modulus | MPa | 11,000 | 11,000 | 10,000 | 11,000 | 11,000 |

[Table 2]

| | | Unit | Example 6 | Example 7 | Example 8 | Example 9 | Example 10 |
|---|---|---|---|---|---|---|---|
| Composition | Polyamide resin (A-1) | wt% | 37.64 | 34.28 | 32.05 | 29.65 | 0 |
| | Polyamide resin (A-2) | wt% | 0 | 0 | 0 | 0 | 0 |
| | Polyamide resin (A-3) | wt% | 0 | 0 | 0 | 0 | 0 |
| | Polyamide resin (A-4) | wt% | 0 | 0 | 0 | 0 | 52.79 |
| | Polyamide resin (A-5) | wt% | 0 | 0 | 5.00 | 4.40 | 0 |
| | Polyamide resin (A-6) | wt% | 9.41 | 8.57 | 10.00 | 8.80 | 5.86 |
| | Modified polyolefin resin (B) | wt% | 6.60 | 5.80 | 6.60 | 5.80 | 5.0 |
| | Nucleating agent (C) | wt% | 0.35 | 0.35 | 0.35 | 0.35 | 0.35 |
| | Lubricant | wt% | 0.25 | 0.25 | 0.25 | 0.25 | 0.25 |
| | Colorant | wt% | 0.75 | 0.75 | 0.75 | 0.75 | 0.75 |
| | Reinforcing material | wt% | 45.00 | 50.00 | 45.00 | 50.00 | 35.00 |
| | Copper-based heat-resistant stabilizer | wt% | 0 | 0 | 0 | 0 | 0 |
| | (B)/((A)+(B))*100 | | 12.30 | 11.92 | 12.30 | 11.92 | 7.86 |
| Results | Airtightness (initial) | | ○ | ○ | ◎ | ◎ | ◎ |
| | Airtightness (after cold-heat shocks, 500 times) | | ○ | ○ | ◎ | ◎ | ◎ |
| | Airtightness (after cold-heat shocks, 1,000 times) | | ○ | ○ | ◎ | ◎ | ◎ |
| | Fluidity | mm | 25 | 20 | 35 | 30 | 40 |
| | Tensile strength | MPa | 240 | 250 | 180 | 180 | 200 |
| | Bending elastic modulus | MPa | 12,000 | 14,500 | 12,000 | 14,000 | 10,900 |

[Table 3]

| | | Unit | Comp. Example 1 | Comp. Example 2 | Comp. Example 3 | Comp. Example 4 | Comp. Example 5 |
|---|---|---|---|---|---|---|---|
| Composition | Polyamide resin (A-1) | wt% | 50.92 | 49.32 | 50.13 | 49.80 | 38.92 |
| | Polyamide resin (A-2) | wt% | 0 | 0 | 0 | 0 | 0 |
| | Polyamide resin (A-3) | wt% | 0 | 0 | 0 | 0 | 0 |
| | Polyamide resin (A-4) | wt% | 0 | 0 | 0 | 0 | 0 |
| | Polyamide resin (A-5) | wt% | 0 | 0 | 0 | 0 | 0 |
| | Polyamide resin (A-6) | wt% | 12.73 | 12.33 | 12.53 | 12.45 | 9.73 |
| | Modified polyolefin resin (B) | wt% | 0.00 | 2.00 | 1.00 | 1.00 | 0.00 |
| | Nucleating agent (C) | wt% | 0.35 | 0.35 | 0.35 | 0.35 | 0.35 |
| | Lubricant | wt% | 0.25 | 0.25 | 0.25 | 0.25 | 0.25 |
| | Colorant | wt% | 0.75 | 0.75 | 0.75 | 0.75 | 0.75 |
| | Reinforcing material | wt% | 35.00 | 35.00 | 35.00 | 35.00 | 50.00 |
| | Copper-based heat-resistant stabilizer | wt% | 0 | 0 | 0 | 0.40 | 0 |
| | (B)/((A)+(B))* | | 0.00 | 3.14 | 1.57 | 1.58 | 0.00 |
| Results | Airtightness (initial) | | ○ | ◎ | ◎ | ○ | ○ |
| | Airtightness (after cold-heat shocks, 500 times) | | × | ○ | ○ | ○ | × |
| | Airtightness (after cold-heat shocks, 1,000 times) | | × | × | × | × | × |
| | Fluidity | mm | 25 | 35 | 30 | 40 | 30 |
| | Tensile strength | MPa | 240 | 240 | 220 | 220 | 270 |
| | Bending elastic modulus | MPa | 12,000 | 11,000 | 12,000 | 12,000 | 18,000 |

As is apparent from Tables 1 to 3, polyamide resin compositions including the polyamide resin (A1), the polyamide resin (A2), a predetermined amount of the modified polyolefin resin (B), and the nucleating agent (C) exhibited excellent initial airtightness when joined to a metal member and excellent airtightness when cold-heat shocks are repeatedly applied.

The present application claims priority to Japanese Patent Application No. 2022-140105, filed on September 2, 2022. The specification, claims, and drawings of the present application are incorporated herein by reference.

Industrial Applicability

According to the polyamide resin composition of the present invention, it is possible to enhance the initial airtightness and airtightness when cold-heat shocks are repeatedly applied after joining a resin member formed by molding the polyamide resin composition to a metal member. For this reason, the present invention is expected to expand applicability of metal/resin joined bodies into the applications used in environments where the temperature changes and where leakage of gas or liquid becomes a problem, for example, vehicle body parts, and the like, and to contribute to the further spread of the metal/resin joined bodies.

Reference Signs List

100 Bus bar unit
110 Bus bar
120 Holding member
200 Moving object
210 Machine body
220 Power source
230 Drive unit
232 Inverter
234 Motor
235 Reduction gear
236 Motor case

**Claims**

1. A polyamide resin composition to be joined with a metal member, the polyamide resin composition comprising:

   a polyamide resin (A);
   a modified polyolefin resin (B); and
   a nucleating agent (C),
   wherein
   the polyamide resin (A) includes

   a polyamide resin (A1) having a melting point (Tm) of 280°C or more as measured by differential scanning calorimetry (DSC), and
   a polyamide resin (A2) having a heat of fusion ($\Delta$H) of 5 J/g or less as measured by the differential scanning calorimetry (DSC), and

   a content of the modified polyolefin resin (B) is 4.70% by mass or more and 20.00% by mass or less based on a sum of a mass of the polyamide resin (A) and a mass of the modified polyolefin resin (B).

2. The polyamide resin composition according to claim 1, wherein the content of the modified polyolefin resin (B) is 4.70% by mass or more and 12.50% by mass or less based on the sum of the mass of the polyamide resin (A) and the mass of the modified polyolefin resin (B).

3. The polyamide resin composition according to claim 1 or 2, wherein a content of a copper-based heat-resistant stabilizer in the polyamide resin composition is 0.30% by mass or less based on a total mass of the polyamide resin composition.

4. The polyamide resin composition according to any one of claims 1 to 3, wherein:

   the polyamide resin (A1) includes a dicarboxylic acid-derived component unit (A1a) and a diamine-derived component unit (A1b); and
   the dicarboxylic acid-derived component unit (A1a) includes a component unit derived from terephthalic acid and a component unit derived from isophthalic acid.

5. The polyamide resin composition according to any one of claims 1 to 4, wherein the polyamide resin (A) further includes a polyamide resin (A3) having a glass transition temperature (Tg) of 70°C or less as measured by the differential scanning calorimetry (DSC).

6. The polyamide resin composition according to claim 5, wherein the polyamide resin (A3) has a melting point (Tm) of 200°C or less as measured by the differential scanning calorimetry (DSC).

7. The polyamide resin composition according to any one of claims 1 to 6, wherein:

the polyamide resin (A1) has a glass transition temperature (Tg) of 75°C or more and 160°C or less as measured by the differential scanning calorimetry (DSC); and
the polyamide resin (A2) has a glass transition temperature (Tg) of 75°C or more and 160°C or less as measured by the differential scanning calorimetry (DSC).

8. The polyamide resin composition according to any one of claims 1 to 7, wherein:

the nucleating agent (C) is talc; and
a content of the nucleating agent (C) is 0.10 to 5.00% by mass based on a total mass of the polyamide resin composition.

9. A metal/resin joined body comprising:

a metal member; and
a resin member that includes a polyamide resin composition and is joined to a surface of the metal member, wherein
the polyamide resin composition includes

a polyamide resin (A),
a modified polyolefin resin (B), and
a nucleating agent (C),

the polyamide resin (A) includes

a polyamide resin (A1) having a melting point (Tm) of 280°C or more as measured by differential scanning calorimetry (DSC), and
a polyamide resin (A2) having a heat of fusion ($\Delta$H) of 5 J/g or less as measured by the differential scanning calorimetry (DSC), and

a content of the modified polyolefin resin (B) is 4.70% by mass or more and 20.00% by mass or less based on a sum of a mass of the polyamide resin (A) and a mass of the modified polyolefin resin (B).

10. A method for producing a metal/resin joined body, the method comprising:

preparing a metal member;
bringing a polyamide resin composition into contact with a surface of the metal member, the polyamide resin composition being softened or molten; and
cooling the polyamide resin composition having been brought into contact with the surface of the metal member, wherein
the polyamide resin composition includes

a polyamide resin (A),
a modified polyolefin resin (B), and
a nucleating agent (C),

the polyamide resin (A) includes

a polyamide resin (A1) having a melting point (Tm) of 280°C or more as measured by differential scanning calorimetry (DSC), and
a polyamide resin (A2) having a heat of fusion ($\Delta$H) of 5 J/g or less as measured by the differential scanning calorimetry (DSC), and

a content of the modified polyolefin resin (B) is 4.70% by mass or more and 20.00% by mass or less based on a sum of a mass of the polyamide resin (A) and a mass of the modified polyolefin resin (B).

11. The method according to claim 10, wherein

in the preparing the metal member, a surface of the metal member is subjected to a roughening treatment, the surface being to be joined to the polyamide resin composition.

12. A bus bar unit comprising:

a bus bar made of a metal; and
a holding member that is disposed in contact with the bus bar and holds the bus bar,
wherein
the holding member includes a molded article of a polyamide resin composition, the polyamide resin composition including a polyamide resin (A), a modified polyolefin resin (B), and a nucleating agent (C), the polyamide resin (A) including a polyamide resin (A1) having a melting point (Tm) of 280°C or more as measured by differential scanning calorimetry (DSC) and a polyamide resin (A2) having a heat of fusion ($\Delta$H) of 5 J/g or less as measured by the differential scanning calorimetry (DSC), and
a content of the modified polyolefin resin (B) is 4.70% by mass or more and 20.00% by mass or less based on a sum of a mass of the polyamide resin (A) and a mass of the modified polyolefin resin (B).

13. A drive unit comprising:

a motor;
an inverter that supplies power to the motor; and
a bus bar unit that electrically connects the motor with the inverter,
wherein the bus bar unit is the bus bar unit according to claim 12.

14. A moving object comprising:

a machine body; and
a drive unit,
wherein the drive unit is the drive unit according to claim 13.

FIG. 1

FIG. 2

## INTERNATIONAL SEARCH REPORT

| International application No. |
|---|
| **PCT/JP2023/030938** |

| A. | CLASSIFICATION OF SUBJECT MATTER |
|---|---|

*C08L 77/00*(2006.01)i; *C08K 3/01*(2018.01)i; *C08L 23/26*(2006.01)i
FI:  C08L77/00; C08K3/01; C08L23/26

According to International Patent Classification (IPC) or to both national classification and IPC

| B. | FIELDS SEARCHED |
|---|---|

Minimum documentation searched (classification system followed by classification symbols)

C08L77/00; C08K3/01; C08L23/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2015/011935 A1 (MITSUI CHEMICALS, INC.) 29 January 2015 (2015-01-29) claims, examples, paragraphs [0016]-[0017], [0083], [0090] | 1-4, 7-11 |
| Y |  | 5-6, 12-14 |
| X | JP 2016-138163 A (MITSUI CHEMICALS, INC.) 04 August 2016 (2016-08-04) claims, examples, paragraphs [0024], [0029], [0100], [0115] | 1-4, 7-11 |
| Y |  | 5-6, 12-14 |
| X | JP 2021-70811 A (UNITIKA LTD) 06 May 2021 (2021-05-06) claims, examples, paragraphs [0012]-[0013], [0032]-[0033], [0042] | 1-4, 7-11 |
| Y |  | 5-6, 12-14 |
| Y | JP 2011-195612 A (SUMITOMO ELECTRIC FINE POLYMER INC) 06 October 2011 (2011-10-06) paragraphs [0008], [0019] | 5-6 |
| Y | JP 2006-57694 A (KOYO SEIKO CO LTD) 02 March 2006 (2006-03-02) paragraph [0011] | 5-6 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **31 October 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** |  |
|  | Telephone No. |

Form PCT/ISA/210 (second sheet) (January 2015)

# EP 4 582 484 A1

## INTERNATIONAL SEARCH REPORT

| | International application No. |
|---|---|
| | **PCT/JP2023/030938** |

### C. DOCUMENTS CONSIDERED TO BE RELEVANT

| Category* | Citation of document, with indication, where appropriate, of the relevant passages | Relevant to claim No. |
|---|---|---|
| Y | JP 2019-206668 A (MITSUI CHEMICALS, INC.) 05 December 2019 (2019-12-05) paragraphs [0027], [0057] | 5-6 |
| Y | JP 2014-33053 A (TOYOTA MOTOR CORP) 20 February 2014 (2014-02-20) paragraph [0026] | 12-14 |
| Y | JP 2013-125825 A (NISSAN MOTOR CO LTD) 24 June 2013 (2013-06-24) paragraph [0047] | 12-14 |
| Y | WO 2012/046517 A1 (AUTONETWORKS TECHNOLOGIES, LTD) 12 April 2012 (2012-04-12) paragraphs [0028], [0043] | 12-14 |
| X | WO 2020/175390 A1 (KURARAY CO., LTD.) 03 September 2020 (2020-09-03) claims, examples, paragraphs [0002], [0026]-[0028] | 1-4, 7-11 |
| Y | | 5-6, 12-14 |
| P, X | JP 2022-138952 A (MITSUI CHEMICALS, INC.) 26 September 2022 (2022-09-26) claims, examples | 1-14 |

Form PCT/ISA/210 (second sheet) (January 2015)

35

## INTERNATIONAL SEARCH REPORT
### Information on patent family members

International application No.

**PCT/JP2023/030938**

| Patent document cited in search report | | | Publication date (day/month/year) | Patent family member(s) | | | Publication date (day/month/year) |
|---|---|---|---|---|---|---|---|
| WO | 2015/011935 | A1 | 29 January 2015 | US 2016/0168381 A1 <br> claims, examples, paragraphs [0022]-[0023], [0094], [0104] <br> EP 3026084 A1 <br> CN 105377990 A <br> KR 10-2016-0018696 A | | | |
| JP | 2016-138163 | A | 04 August 2016 | (Family: none) | | | |
| JP | 2021-70811 | A | 06 May 2021 | CN 112592582 A <br> claims, examples, paragraphs [0025]-[0026], [0057]-[0058], [0069] | | | |
| JP | 2011-195612 | A | 06 October 2011 | (Family: none) | | | |
| JP | 2006-57694 | A | 02 March 2006 | (Family: none) | | | |
| JP | 2019-206668 | A | 05 December 2019 | (Family: none) | | | |
| JP | 2014-33053 | A | 20 February 2014 | US 2014/0035124 A1 <br> paragraph [0043] <br> CN 103579303 A <br> TW 201421678 A | | | |
| JP | 2013-125825 | A | 24 June 2013 | (Family: none) | | | |
| WO | 2012/046517 | A1 | 12 April 2012 | US 2013/0164595 A1 <br> paragraphs [0042], [0058] <br> EP 2626946 A1 <br> CN 103155265 A | | | |
| WO | 2020/175390 | A1 | 03 September 2020 | US 2022/0056268 A1 <br> claims, examples, paragraphs [0003], [0076]-[0079] <br> EP 3932979 A1 <br> CN 113474408 A | | | |
| JP | 2022-138952 | A | 26 September 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017132243 A
- WO 03085029 A

- JP 2022140105 A